# EUROPÄISCHE PATENTSCHRIFT

(11) **EP 4 368 011 B1**
(45) Veröffentlichungstag und Bekanntmachung des Hinweises auf die Patenterteilung: **26.03.2025**
(21) Anmeldenummer: 23199282.7
(22) Anmeldetag: 25.09.2023
(51) Int. Cl.: A01D 84/00

(54) **SCHWADER**
SWATHER
ANDAINEUSE

(30) Priorität: 09.11.2022 DE 102022129617
(43) Veröffentlichungstag der Anmeldung: 15.05.2024
(73) Patentinhaber: Maschinenfabrik Bernard Krone GmbH & Co. KG, 48480 Spelle (DE)
(72) Erfinder: Afting, Andreas, 48488 Emsbüren (DE); OSTHUES, CHRISTIAN, 48477 Hörstel (DE); HASSIG, SEBASTIAN, 49599 Voltlage (DE); Horstmann, Jan, 48431 Rheine (DE); Horstmann, Dr. Josef, 49479 Ibbenbüren (DE)

(56) Entgegenhaltungen:
- WO-A1-2013/034480
- DE-A1- 102010 010 862
- DE-A1- 102011 053 352
- DE-U1- 202017 000 595
- US-B1- 9 386 749

## Beschreibung

Die vorliegende Erfindung betrifft einen Schwader nach dem Oberbegriff von Anspruch 1 sowie ein Verfahren nach dem Oberbegriff von Anspruch 7.

Verschiedene Landmaschinen wie zum Beispiel Schwader, Ballenpressen oder Ladewagen nehmen bei der Feldbearbeitung am Boden liegendes Erntegut, zum Beispiel Gras oder Heu, auf, um dieses zum Beispiel zu bearbeiten, abzutransportieren oder - im Falle eines Schwaders - zu bewegen und an anderer Stelle wieder abzulegen. Zum Aufnehmen des Erntegutes kann eine Aufnahmevorrichtung oder Pick-up dienen, die in der Regel vorderseitig der Landmaschine angeordnet ist und in geringem Abstand über den Boden geführt wird. Das Erntegut wird mit einem Aufnahmerotor, der um eine in Querrichtung verlaufende Achse rotiert, vom Boden aufgehoben. Das aufgenommene Erntegut kann direkt an eine nachgeordnete Vorrichtung übergeben werden. Zum Teil wird die Übergabe durch einen zweiten Rotor unterstützt. Im Falle eines Bandschwaders wird das Erntegut an eine Querfördervorrichtung übergeben, die das Erntegut mit einem Förderband oder dergleichen quer zur Fahrtrichtung fördert und es seitlich wieder ablegt. Je nach Menge und Beschaffenheit des Erntegutes kann es bei der Aufnahme, Förderung und Übergabe des Erntegutes durch die Aufnahmevorrichtung zu Problemen kommen, die den Erntegutfluss stören und/oder zur Beeinträchtigung der Qualität des Erntegutes führen können. Ein Problem besteht darin, dass sich die Zinken des Aufnahmerotors in Bodennähe entgegen der Fahrtrichtung bewegen und erst im weiteren Verlauf der Rotation aufwärts und dann entgegen der Fahrtrichtung nach hinten. Die unvermeidliche Bewegung entgegen der Fahrtrichtung kann dazu führen, dass Erntegut nach vorne geschoben oder geschleudert wird. Auch ist eine optimale Übergabe an die Querfördervorrichtung schwierig zu realisieren. Dabei sollen insbesondere eine bereichsweise Anhäufung von Erntegut auf der Querfördervorrichtung wie auch ein Verfehlen der Querfördervorrichtung vermieden werden. Verschiedene Schwader sind z.B. aus den folgenden Dokumenten bekannt DE 10 2010 010862 A1, US 9 386 749 B1, WO 2013/034480 A1, DE 20 2017 000595 U1 und DE 10 2011 053352 A1.

Aufgabe der Erfindung ist es, bei einem Schwader eine effiziente Aufnahme von Erntegut sowie Weitergabe desselben an eine Querfördervorrichtung zu ermöglichen.

Die Aufgabe wird gelöst mit einem Schwader mit den Merkmalen des unabhängigen Patentanspruchs 1 sowie mit einem Verfahren zum Betreiben eines Schwaders mit den Merkmalen des unabhängigen Patentanspruchs 7. Vorteilhafte Ausführungsformen sind den abhängigen Ansprüchen entnehmbar.

Dafür wird ein Schwader geschaffen, mit wenigstens einer Aufnahmevorrichtung, die einen Aufnahmerotor und einen Übergaberotor aufweist, welche um Drehachsen, die sich wenigstens überwiegend entlang einer Querachse erstrecken, gleichsinnig antreibbar sind, wobei der Aufnahmerotor dazu eingerichtet ist, landwirtschaftliches Erntegut mittels Aufnahmezinken vom Boden aufzunehmen, bezüglich einer Hochachse anzuheben und an den Übergaberotor zu übergeben, der wenigstens teilweise höher angeordnet ist als der Aufnahmerotor und dazu eingerichtet ist, das Erntegut mittels Übergabezinken zu übernehmen, es wenigstens anfänglich bezüglich der Hochachse anzuheben und es an eine nachgeordnete Querfördervorrichtung zu übergeben, welche bezüglich einer Längsachse wenigstens teilweise hinter der Aufnahmevorrichtung angeordnet und dazu eingerichtet ist, das vom Übergaberotor übergebene Erntegut auf einer Förderfläche aufzunehmen, mittels eines Förderelements entlang der Querachse zu fördern und schwadweise auf dem Boden abzulegen, wobei der Übergaberotor dazu eingerichtet ist, das Erntegut bezüglich der Hochachse wenigstens teilweise oberhalb der Förderfläche abzugeben und auf diese abzuwerfen.

Der Schwader dient dazu, landwirtschaftliches Erntegut, zum Beispiel Gras oder Heu, welches beispielsweise flächig und/oder zufällig verteilt auf dem Boden liegt, aufzunehmen und in Schwaden wieder abzulegen. Derartige Maschinen werden auch als Merger oder als Heuwerbungsmaschinen bezeichnet, wobei die Anwendbarkeit ausdrücklich nicht auf Heu beschränkt ist. Normalerweise verfügt der Schwader über keinen eigenen Fahrantrieb und ist dazu vorgesehen, von einem Schlepper gezogen oder eventuell auch als Anbaugerät von einer Landmaschine front- oder heckseitig getragen zu werden. Eine Ausgestaltung mit eigenen Fahrantrieb ist allerdings denkbar.

Der Schwader kann einen Hauptrahmen aufweisen, der im Betriebszustand über ein Fahrwerk abstützbar ist. Der Hauptrahmen kann das Fahrwerk aufweisen, das somit Teil des Schwaders ist. Wenn der Schwader als Anbaugerät ausgelegt ist, ist er im Betriebszustand an eine Landmaschine angekoppelt, die das Fahrwerk aufweist. In jedem Fall kann über den Hauptrahmen und das Fahrwerk wenigstens ein Teil der Gewichtskraft des Schwaders aufgenommen und bodenseitig abgestützt werden. Der Hauptrahmen kann außerdem zur wenigstens indirekten Verbindung mit einem Schlepper ausgebildet sein, wobei eine hierfür genutzte Deichsel als Teil des Hauptrahmens angesehen werden kann. Alternativ kann der Hauptrahmen Strukturen zur Verbindung mit einer Landmaschine aufweisen, die einen Einsatz als Anbaugerät ermöglichen.

Die Aufnahmevorrichtung weist einen Aufnahmerotor und einen Übergaberotor auf, welche um Drehachsen, die sich wenigstens überwiegend entlang einer Querachse erstrecken, gleichsinnig antreibbar sind. Die Querachse sowie die nachfolgend genannte Hoch- und Längsachse können als Achsen der Aufnahmevorrichtung und/oder als Achsen des Schwaders angesehen werden. Zumindest im Betriebszustand verläuft die Längsachse normalerweise parallel oder antiparallel zur Fahrtrichtung, während die Querachse horizontal und senkrecht zur Längsachse verläuft und die Hochachse vertikal verläuft. Die Drehachsen der beiden Rotoren können insbesondere parallel zueinander verlaufen. Sie erstrecken sich wenigstens überwiegend entlang der Querachse, das heißt sie verlaufen entweder parallel zur Querachse oder nicht-parallel zu dieser, wobei allerdings die Hauptkomponente ihrer Verlaufsrichtung parallel zur Querachse verläuft. In der Regel beträgt der Winkel zwischen einer Drehachse und der Querachse höchstens 30° oder höchstens 20°. Es sind Ausführungsformen denkbar, bei denen jeder Rotor bezüglich der Querachse zweigeteilt ist, wobei die Rotorhälften gegeneinander verkippbar sind. In diesem Fall verläuft die Drehachse in beiden Rotorhälften unterschiedlich, insgesamt erstreckt sie sich aber überwiegend entlang der Querachse. Die Rotoren sind gleichsinnig antreibbar. Man kann auch sagen, der Schwader und/oder die Aufnahmevorrichtung sind dazu eingerichtet, die Rotoren gleichsinnig anzutreiben, also im gleichen Drehsinn.

Der Aufnahmerotor ist dazu eingerichtet, landwirtschaftliches Erntegut mittels Aufnahmezinken vom Boden aufzunehmen, bezüglich der Hochachse anzuheben und an den Übergaberotor zu übergeben. Die Übergabezinken erstrecken sich bezüglich der Drehachse des Aufnahmerotors in radialer Richtung nach außen. Sie können an einem gemeinsamen Rotorkern angeordnet sein, der um die Drehachse drehbar ist. Die Aufnahmezinken sind ungesteuert, das heißt sie sind - zum Beispiel über den Rotorkern - relativ zueinander drehfest verbunden, können aber gegebenenfalls elastisch auslenkbar sein. Die Aufnahmezinken können aus Metall bestehen, gegebenenfalls aber auch aus anderen Materialien wie Kunststoff oder Verbundstoffen. Sie können insbesondere aus Draht oder Stangen ausgebildet sein. Alternativ wäre auch eine Ausbildung aus Blech oder vergleichbarem flächigem Material möglich. Der Aufnahmerotor kann in geringem Abstand am Boden entlang geführt werden, wobei die Aufnahmezinken das Erntegut erfassen und dieses mitführen. Entsprechend der Drehbewegung des Aufnahmerotors wird das Erntegut bezüglich der Hochachse angehoben, wobei selbstverständlich keine reine vertikale Bewegung erfolgt, sondern die Hubbewegung von einer horizontalen Bewegung überlagert wird. Insgesamt ist das Erntegut allerdings deutlich oberhalb des Bodens angeordnet, wenn es an den Übergaberotor übergeben wird.

Der Übergaberotor ist wenigstens teilweise höher angeordnet als der Aufnahmerotor, also hat wenigstens ein Teil des Übergaberotors bezüglich der Hochachse eine höhere Position als der Aufnahmerotor. Der Übergaberotor ist dazu eingerichtet, das Erntegut mittels Übergabezinken zu übernehmen, es wenigstens anfänglich bezüglich der Hochachse anzuheben und an eine nachgeordnete Querfördervorrichtung zu übergeben. Die oben hinsichtlich der Aufnahmezinken gemachten Ausführungen lassen sich weitgehend auf die Übergabezinken übertragen. Allerdings ist für die Übergabezinken eine Ausbildung aus Blech oder anderem flächigem Material bevorzugt. In einer bevorzugten Ausführungsform sind die Übergabezinken des Übergaberotors aus einem Kunststoff hergestellt. Sowohl die Aufnahmezinken also auch die Übergabezinken können in Zinkenkränzen gruppiert sein, die mehrere Zinken aufweisen, deren axiale Position bezüglich der Drehachse übereinstimmt. Der Übergaberotor übernimmt das Erntegut und übergibt es an die nachgeordnete Querfördervorrichtung. Zwischen der Übernahme und der Übergabe fördert der Übergaberotor das Erntegut normalerweise bezüglich der Längsachse nach hinten, also entgegen der Fahrtrichtung. Diese horizontale Bewegung kann wiederum von einer vertikalen Bewegung überlagert sein. Insgesamt wird das Erntegut nicht nur durch den Aufnahmerotor, sondern auch durch den Übergaberotor aufwärts gefördert und somit angehoben. "Wenigstens anfänglich" bezieht sich in diesem Zusammenhang auf die Bewegungsphase des Erntegutes, die auf die Übernahme durch den Übergaberotor folgt. Die oben geschilderten Vorteile einer Aufteilung der Förderstrecke auf zwei Rotoren gelten selbstverständlich auch für das Aufwärtsfördern des Erntegutes. Es kann in erntegutschonender und effizienter Weise eine Förderhöhe erreicht werden, die vorteilhafte Möglichkeiten hinsichtlich der Übergabe an die nachgeordnete Querfördervorrichtung ermöglicht.

Die Querfördervorrichtung ist bezüglich einer Längsachse wenigstens teilweise hinter der Aufnahmevorrichtung angeordnet und ist dazu eingerichtet, das vom Übergaberotor übergebene Erntegut auf einer Förderfläche aufzunehmen, mittels eines Förderelements entlang der Querachse zu fördern und schwadweise auf dem Boden abzulegen. Das Förderelement, welches auch als Förderorgan bezeichnet werden kann, ist antreibbar und dazu eingerichtet, das auf der Förderfläche aufgenommene Erntegut zu fördern. Dabei kann die Förderfläche ganz oder teilweise durch das Förderelement selbst gebildet sein, zum Beispiel wenn dieses als Förderband oder Gliederband ausgebildet ist, wobei man auch von einem Bandschwader sprechen kann. Es wäre aber zum Beispiel auch denkbar, dass die Förderfläche teilweise stationär ist und das Förderelement sich über die Förderfläche hinwegbewegt und dabei das Erntegut erfasst, zum Beispiel im Falle eines Kettenförderers. Auch im Fall eines Bandschwaders können zum Beispiel Förderleisten seitlich über einen Bandkörper vorstehen und so Erntegut erfassen, welches den eigentlichen Bandkörper verfehlt hat. Die Förderfläche erstreckt sich in diesem Fall über den Bandkörper hinaus. Die Förderfläche kann insgesamt eben ausgebildet sein, normalerweise ist zumindest ein bezüglich der Längsachse mittlerer Bereich der Förderfläche eben. Normalerweise fördert die Querfördervorrichtung das Erntegut parallel zur Querachse, sie könnte es allerdings auch in einem gewissen Winkel zur Querachse fördern. Die Querfördervorrichtung kann einen Querförderrahmen aufweisen, an welchem das Förderelement beweglich gelagert ist. Der Querförderrahmen verleiht der Querfördervorrichtung insgesamt mechanische Stabilität und ist normalerweise in sich starr ausgebildet. Die Aufnahmevorrichtung kann mit der Querfördervorrichtung verbunden sein. Insbesondere kann sie über den Querförderrahmen mit dem Hauptrahmen verbunden sein. Normalerweise sind die Querfördervorrichtung und/oder die Aufnahmevorrichtung gegenüber dem Hauptrahmen beweglich, insbesondere wenigstens bezüglich der Hochachse höhenbeweglich. Zusätzlich zu der Höhenbeweglichkeit kann auch eine Beweglichkeit entlang der Längsachse und/oder der Querachse gegeben sein. Abgesehen von translatorischen Bewegungen des Querförderrahmen sind auch rotatorische Bewegung denkbar, beispielsweise ein Querpendeln (entsprechend einer Rotation um die Längsachse).

Der Übergaberotor ist dazu eingerichtet, das Erntegut bezüglich der Hochachse wenigstens teilweise oberhalb der Förderfläche abzugeben und auf diese abzuwerfen Dies lässt sich gut realisieren, da der Aufnahmerotor das Erntegut an den höher angeordneten Übergaberotor übergibt. In jedem Fall erstreckt sich der Übergaberotor höher als die Förderfläche, oder zumindest als ein Teil derselben. Je nach Ausführungsform lässt sich nicht exakt bestimmen, an welchem Punkt und somit in welcher Höhe das Erntegut vom Übergaberotor abgegeben wird. Normalerweise lässt sich allerdings ein typischer Abgabebereich identifizieren. Insbesondere bei einer ausreichend hohen Drehzahl kann das Erntegut in etwa tangential von den Übergabezinken abgeworfen werden. Es fällt dann in einer normalerweise bogenförmigen Flugbahn auf die Förderfläche.

Der Schwader kann wenigstens eine Schwadereinheit aufweisen, die ihrerseits die Aufnahmevorrichtung und die Querfördervorrichtung aufweist. Die Schwadereinheit kann wenigstens indirekt mit dem Hauptrahmen verbunden sein. Typischerweise ist entweder genau eine Schwadereinheit vorgesehen oder zwei Schwadereinheiten. Die jeweilige Schwadereinheit kann mit einem Seitenausleger verbunden sein, der seinerseits mit dem Hauptrahmen verbunden ist oder einen Teil desselben bildet. Die Schwadereinheit weist diejenigen Elemente des Schwaders auf, die bestimmungsgemäß direkt mit dem Erntegut in Kontakt kommen und dieses transportieren.

Erfindungsgemäß ist vorgesehen, dass in wenigstens einer Arbeitsposition des Schwaders eine Normalengerade, welche senkrecht zu einem bezüglich der Längsachse mittleren Bereich der Förderfläche und durch einen bezüglich der Längsachse vordersten Punkt des Förderelements verläuft, einen Bewegungsbereich der Übergabezinken wenigstens berührt. Die Arbeitsposition ist eine Position, in welcher sich der Schwader bestimmungsgemäß während der Feldbearbeitung befindet. Diese kann sich zum Beispiel von einer Transportposition für den Straßentransport unterscheiden. Es ist möglich, dass der Schwader eine Mehrzahl von Arbeitspositionen einnehmen kann. Die hier beschriebene Anordnung ist in wenigstens einer Arbeitsposition gegeben, unter Umständen auch in jeder Arbeitsposition. Die Normalengerade, welche auch als "normale Gerade" oder "Normale" bezeichnet werden kann, verläuft senkrecht zum mittleren Bereich der Förderfläche. Im Falle einer ebene Förderfläche verläuft die Normalengerade daher senkrecht zur Förderfläche. Außerdem läuft sie durch einen bezüglich der Längsachse vordersten Punkt des Förderelements, man kann auch sagen, durch den in Fahrtrichtung vordersten Punkt. Dieser vorderste Punkt markiert nach vorne hin die Grenze des Bereichs, in dem Erntegut noch direkt vom Förderelement erfasst werden kann. Der Bewegungsbereich eines Zinkens ist derjenige Bereich, den der Zinken aufgrund der Drehbewegung des Rotors durchläuft. Dieser Bewegungsbereich ist rotationssymmetrisch zur Drehachse des Rotors. In Richtung der Drehachse betrachtet ist er kreisförmig oder kreisringförmig. Der Bewegungsbereich der Übergabezinken (in ihrer Gesamtheit), auf den hier Bezug genommen wird, ist allerdings zylinderförmig (und um die Drehachse des Übergaberotors zentriert). Die Normalengerade berührt den Bewegungsbereich zumindest. Bevorzugt schneidet sie den Bewegungsbereich. Sie verläuft also nicht bezüglich der Längsachse rückwärtig am Bewegungsbereich vorbei. Diese Anordnung des Bewegungsbereichs und der Normalengeraden kann einerseits darauf beruhen, dass der Übergaberotor bezüglich der Längsachse nur einen geringen Abstand zum Förderelement hat oder auch mit diesem überlappt. Andererseits kann sie darauf beruhen, dass die Förderfläche nach vorne zur Übergabevorrichtung hin geneigt ist. Wie nachfolgend noch erläutert wird, kann insbesondere eine Kombination dieser Merkmale vorliegen. In jedem Fall ist es bei dieser Anordnung kaum möglich, dass Erntegut, welches vom Übergaberotor abfällt oder abgeschleudert wird, die Förderfläche verfehlt oder in einem Bereich landet, der vom Förderelement nicht erfasst wird. Dies wiederum ist von Vorteil für eine erfindungsgemäß vorgesehene Übergabe, bei der Erntegut nicht auf die Förderfläche geschoben wird, sondern auf diese abgeworfen wird. Während ersteres eine Beschädigung des Erntegutes begünstigen könnte, ist letzteres als besonders schonend für das Erntegut anzusehen.

Bevorzugt greifen die Übergabezinken derart zwischen die Aufnahmezinken ein, dass sich Bewegungsbereiche von Übergabezinken und von Aufnahmezinken, entlang der Querachse gesehen, überlappen. Wie bereits oben erläutert, ist der Bewegungsbereich der Übergabezinken insgesamt zylinderförmig. Gleiches gilt für den Bewegungsbereich der Aufnahmezinken. In Richtung der Drehachse betrachtet sind die jeweiligen Bewegungsbereiche kreisförmig oder kreisringförmig. Entlang der Querachse gesehen, überlappen bei dieser Ausführungsform die Bewegungsbereiche von Übergabezinken und Aufnahmezinken miteinander. Wie oben dargelegt, unterscheidet sich die Verlaufsrichtung der Querachse nicht oder nur geringfügig von denjenigen der Drehachsen. Bezogen auf die insgesamt zylindrische Form der Bewegungsbereiche kann man statt von einem Überlappen auch davon sprechen, dass die Bewegungsbereiche einander schneiden und/oder durchdringen. Außerdem kann man sagen, dass die Summe der Radien der Bewegungsbereiche eines Aufnahmezinkens und eines Übergabezinkens größer ist als der Abstand der Drehachsen der beiden Rotoren. Somit greifen die Übergabezinken in Zwischenräume ein, die entlang der Querachse zwischen den Aufnahmezinken ausgebildet sind. Entsprechend greifen die Aufnahmezinken in Zwischenräume ein, die entlang der Querachse zwischen den Übergabezinken ausgebildet sind. Durch das Eingreifen in die Zwischenräume wird die Übergabe des Ernteguts wesentlich verbessert. Die Übergabezinken sind in der Lage, Erntegut direkt zu erfassen, das sich noch zwischen den Aufnahmezinken befindet.

Vorteilhaft weist die Aufnahmevorrichtung eine Abstreifvorrichtung auf mit Aufnahmezinken-Abstreiferabschnitten sowie bezüglich der Querachse dazwischen ausgebildeten Aufnahmezinken-Zwischenräumen, durch welche die Aufnahmezinken wenigstens teilweise hindurchragen, sowie Übergabezinken-Abstreiferabschnitten und dazwischen ausgebildete Übergabezinken-Zwischenräumen, durch welche die Übergabezinken wenigstens teilweise hindurchragen, wobei die Übergabezinken-Abstreiferabschnitte derart ausgebildet sind, dass die Übergabezinken entsprechend einer Rotation des Übergaberotors zwischen ihnen eintauchen. Die Aufnahmezinken-Abstreiferabschnitte können durch einzelne Elemente gebildet sein oder sie können Teilabschnitte eines einzigen Bauteils sein. In der Regel sind sie aus Stahl gefertigt und können zum Beispiel streifenförmig ausgebildet sein. Ihre Funktion besteht darin, Erntegut wenigstens teilweise von den Aufnahmezinken abzustreifen, wenn sich diese im Zuge der Drehbewegung an den Aufnahmezinken-Abstreiferabschnitten entlang bewegen. Dabei bewegen sich die Aufnahmezinken durch Aufnahmezinken-Zwischenräume, die zwischen den Aufnahmezinken-Abstreiferabschnitten ausgebildet sind. Sie ragen wenigstens teilweise durch die genannten Zwischenräume hindurch. Normalerweise ist vorgesehen, dass sie sich auf Ihrer Bewegungsbahn in einem bestimmten Bereich vollständig zwischen den Aufnahmezinken-Abstreiferabschnitte eintauchen oder abtauchen, sich also zwischen diese zurückziehen. Sie entfernen sich von einer Außenseite der Abstreifvorrichtung, auf welcher das Erntegut zurückgehalten werden kann, zu einer Innenseite. Es wären unter Umständen auch Ausgestaltungen denkbar, bei denen die Aufnahmezinken nicht vollständig abtauchen. Dabei könnte im Bereich der Spitzen der Aufnahmezinken verbleibendes Erntegut durch die Übergabezinken abgenommen werden. Die Funktion der Übergabezinken-Abstreiferabschnitte bezüglich der Übergabezinken entspricht derjenigen der Aufnahmezinken-Abstreiferabschnitte bezüglich der Aufnahmezinken, das heißt sie streifen Erntegut von den Übergabezinken ab, wenn sich diese an ihnen entlang bewegen. Insbesondere ziehen sich die Übergabezinken vollständig zwischen die Übergabezinken-Abstreifer zurück, das heißt sie tauchen vollständig in die Übergabezinken-Zwischenräume ein. Somit wird ein vollständiges Abstreifen des Erntegutes ermöglicht oder sogar erzwungen. Wenngleich zwischen Aufnahmezinken-Abstreiferabschnitten und Übergabezinken-Abstreiferabschnitten unterschieden wird, kann ein Aufnahmezinken-Abstreiferabschnitt unmittelbar an einen Übergabezinken-Abstreiferabschnitt angrenzen oder sogar einstückig mit diesem ausgebildet sein. Die Übergabezinken-Zwischenräume sind bezüglich der Querachse zu den Aufnahmezinken-Zwischenräumen versetzt angeordnet. Dies entspricht der zueinander versetzten Anordnung von Aufnahmezinken und Übergabezinken.

Es sind Ausgestaltungen denkbar, bei denen Aufnahmezinken-Zwischenräume und Übergabezinken-Zwischenräume voneinander getrennt sind. Bevorzugt ist allerdings, dass wenigstens ein Aufnahmezinken-Zwischenraum in einem Übergangsbereich in einen Übergabezinken-Zwischenraum übergeht. Somit bilden die beiden Zwischenräume Teilbereiche eines durchgehenden Zwischenraums. Der Übergangsbereich kann dem Aufnahmezinken-Zwischenraum und/oder dem Übergabezinken-Zwischenraum zugeordnet werden, wobei die Zuordnung oftmals nicht eindeutig ist. Regelmäßig zieht sich ein Aufnahmezinken im Übergangsbereich auf die Innenseite der Abstreifvorrichtung zurück, während ein Übergabezinken dort zur Außenseite hin auftaucht. Im Übergangsbereich oder zumindest nahe demselben kommt es also zu einer Übergabe von Erntegut zwischen den Rotoren. Diese Übergabe wird dadurch begünstigt, dass die Zwischenräume ineinander übergehen, statt voneinander getrennt zu sein.

Eine Ausführungsform sieht vor, dass ein Eintauchbereich, in welchem die Übergabezinken vollständig zwischen den Übergabezinken-Abstreiferabschnitten eintauchen, in wenigstens einer Arbeitsposition des Schwaders vertikal über der Förderfläche angeordnet ist. Der Eintauchbereich ist der Bereich, in dem das Eintauchen der Übergabezinken abgeschlossen ist. Eventuell noch an den Übergabezinken anhaftendes Erntegut wird spätestens in dem Eintauchbereich, welcher auch als Rückzugsbereich bezeichnet werden kann, von den Übergabezinken abgestreift. Dieser entspricht normalerweise dem niedrigsten Punkt, von welchem aus Erntegut herabfallen kann. Dieser Eintauchbereich ist vertikal, also senkrecht, über der Förderfläche angeordnet. Für das Erntegut ergibt sich somit eine Fallstufe von dem Eintauchbereich zur Förderfläche. Deren Höhe kann beispielsweise wenigstens 10% oder wenigstens 15% des Durchmessers des Bewegungsbereichs der Übergabezinken betragen. Da der Eintauchbereich in Richtung der Hochachse über der Förderfläche angeordnet ist, landet selbst senkrecht vom Eintauchbereich herabfallendes Erntegut noch auf der Förderfläche und geht somit nicht verloren. Die entsprechende Anordnung ist in wenigstens einer Arbeitsposition gegeben, bevorzugt kann sie in jeder Arbeitsposition gegeben sein.

Alternativ oder zusätzlich ist es bevorzugt, dass der Eintauchbereich bezüglich einer Drehachse des Übergaberotors um über 70° gegenüber einem obersten Punkt des Bewegungsbereichs der Übergabezinken versetzt ist. Der Eintauchbereich entspricht dem letzten Punkt, an dem noch Erntegut abgegeben wird. Dies geschieht bei dieser Ausführungsform in einer relativ späten Phase der Rotation. Im obersten Punkt des Bewegungsbereichs bewegen sich die Übergabezinken waagerecht, normalerweise parallel zur Längsachse. Nach einer weiteren Rotation um 70° bewegen sie sich überwiegend senkrecht abwärts. Der Eintauchbereich liegt hier demnach in einem Bereich, in dem sich die Übergabezinken abwärts bewegen, wenngleich sie eine geringfügige Bewegungskomponente in horizontaler Richtung aufweisen können. Das Erntegut kann, sofern es sich nicht vorher durch Fliehkraft abgelöst hat, relativ weit von den Übergabezinken mitgeführt werden. Der Eintauchbereich kann weiter bevorzugt über 80°, besonders bevorzugt über 90°, gegenüber dem obersten Punkt versetzt sein. Im letztgenannten Fall haben die Übergabezinken in Bezug auf die horizontale Bewegungskomponente bereits einen Umkehrpunkt durchschritten, wenn sie den Eintauchbereich erreichen.

Eine Ausführungsform sieht vor, dass in wenigstens einer Arbeitsposition des Schwaders eine Tangentiale an den Bewegungsbereich der Übergabezinken, welche durch den bezüglich der Längsachse vordersten Punkt des Förderelements verläuft, mit einer horizontalen Ebene einen ersten Winkel einschließt, der, ausgehend von der horizontalen Ebene im Rotationssinn des Übergaberotors gemessen, wenigstens 60° beträgt. Bevorzugt kann der erste Winkel wenigstens 70° oder wenigstens 80° betragen. Die Tangentiale verläuft in der Rotationsebene der Übergabezinken, also senkrecht zur Rotationsachse des Übergaberotors. Entsprechend der Bezeichnung "tangential" berührt sie den Bewegungsbereich, ohne ihn zu schneiden. Sie verläuft durch den oben beschriebenen vordersten Punkt des Förderelements. Misst man ausgehend von einer horizontalen Ebene den Winkel zur Tangentialen, und zwar im Rotationssinn des Übergaberotors, so beträgt dieser Winkel wenigstens 60°. Man kann auch sagen, dass die Tangentiale in Rotationsrichtung des Übergaberotors um wenigstens 60° gegenüber der horizontalen Ebene gedreht ist. Da der vorderste Punkt des Förderelements den vorderen Rand des noch direkt erfassbaren Teils der Förderfläche markiert, kann Erntegut, welches vom Übergaberotor tangential abgeschleudert wird, auch dann noch in diesem Bereich landen, wenn es gegenüber dem obersten Punkt der Bewegungsbahn der Übergabezinken bereits 60° zurückgelegt hat. Dies gilt unter der Annahme, dass das Erntegut sich geradlinig zur Förderfläche bewegt, was nicht exakt richtig ist, allerdings zur Abschätzung benutzt werden kann. Insbesondere ist dabei zu berücksichtigen, dass sich die Übergabezinken bei einem Winkel von wenigstens 60° jenseits des obersten Punktes schon anteilig hauptsächlich abwärts bewegen, während die horizontale Bewegungskomponente vergleichsweise gering ist. Daher wird das hier abgeschleuderte Erntegut nur noch wenig von der Schwerkraft abgelenkt. Diese Ausgestaltung sorgt jedenfalls dafür, dass auch Erntegut, welches noch vergleichsweise lange von den Übergabezinken mitgeführt wird, sicher von der Querförderrichtung erfasst wird.

Es wird in diesem Zusammenhang als eigenständige Erfindung angesehen, einen Schwader nach dem Oberbegriff des Anspruchs 1 bereitzustellen, bei dem in wenigstens einer Arbeitsposition des Schwaders eine Tangentiale an den Bewegungsbereich der Übergabezinken, welche durch einen bezüglich der Längsachse vordersten Punkt des Förderelements verläuft, mit einer horizontalen Ebene einen ersten Winkel einschließt, der, ausgehend von der horizontalen Ebene im Rotationssinn des Übergaberotors gemessen, wenigstens 60° beträgt.

Eine Ausgestaltung sieht vor, dass die Querfördervorrichtung zumindest derart anordenbar ist, dass die Förderfläche gegenüber der horizontalen Ebene zur Aufnahmevorrichtung hin geneigt ist. Insbesondere kann dies für den mittleren Bereich der Förderfläche gelten. Das heißt die Förderfläche (oder zumindest der mittlere Bereich) ist entweder dauerhaft entsprechend geneigt oder es sind verschiedene Anordnungen der Querfördervorrichtung möglich, wobei die Förderfläche in wenigstens einer der genannten Anordnungen zur Aufnahmevorrichtung hin geneigt ist. Die Förderfläche verläuft also nicht horizontal, sondern ist zur Aufnahmevorrichtung hin geneigt, also in der Regel in Fahrtrichtung nach vorne. Der Neigungswinkel gegenüber der horizontalen Ebene (nachfolgend auch: zweiter Winkel) kann insbesondere zwischen 5° und 35°, bevorzugt zwischen 10° und 30°, weiter bevorzugt zwischen 15° und 25° betragen. Unabhängig davon, ob die Förderfläche wie hier beschrieben geneigt ist, kann auf einer der Aufnahmevorrichtung gegenüberliegenden Seite der Förderfläche eine Rückhaltevorrichtung, insbesondere ein Prallblech, angeordnet sein. Dieses kann gegenüber der horizontalen Ebene eine deutlich stärkere Neigung in Fahrtrichtung nach vorne aufweisen (zum Beispiel über 70°) und kann sogar überhängende Bereiche aufweisen, die nach oben hin in Fahrtrichtung vorspringen.

Die Ausgestaltung mit zwei Rotoren trägt dazu bei, zu verhindern, dass sich vor dem Aufnahmerotor ein übermäßig hoher Haufen von Erntegut sammelt. Dieser Effekt kann noch weiter unterstützt werden. Gemäß einer entsprechenden Ausgestaltung des weist der Schwader (bevorzugt: die Schwadereinheit) einen Niederhalter auf. Der Niederhalter begrenzt den Bewegungsspielraum des Erntegutes nach oben hin. Er kann das Erntegut bereits vor der Aufnahme durch den Aufnahmerotor von oben mit Druck beaufschlagen und so verhindern, dass es sich übermäßig auftürmt. Außerdem kann er das von einem der Rotoren bereits erfasste Erntegut mit Druck beaufschlagen und/oder dessen Bewegungsspielraum begrenzen. Er kann auch je nach Position relativ zu den Rotoren bestimmen, ab welchem Punkt das Erntegut frühestens den Übergaberotor verlassen kann.

Bevorzugt weist der Niederhalter eine bezüglich der Längsachse wenigstens teilweise vor dem Aufnahmerotor angeordnete, drehbare Niederhalterwalze sowie eine bezüglich der Längsachse wenigstens teilweise dahinter angeordneten Leitabdeckung auf, die zwischen sich und wenigstens einem der Rotoren einen Förderkanal für Erntegut definiert. Die Niederhalterwalze, welche eine glatte oder profilierte Oberfläche aufweisen kann, ist um eine normalerweise parallel zur Querachse verlaufende Drehachse drehbar. Sie übt insbesondere einen vertikalen Druck auf das Erntegut vor dem Aufnahmerotor aus und beschränkt somit ein Auftürmen des Ernteguts. Gleichzeitig kann sie je nach Ausgestaltung auch als Gegenhalter für Erntegut wirken, welches bereits vom Aufnahmerotor aufgenommen wurde. Der Niederhalter weist außerdem eine Leitabdeckung auf, die bezüglich der Längsachse wenigstens teilweise hinter der Niederhalterwalze angeordnet ist. Sie kann sich in gewissem Abstand an die Niederhalterwalze anschließen. Die Leitabdeckung kann insbesondere wenigstens ein Leitblech aufweisen oder als ein solches ausgebildet sein. Bevorzugt ist sie für Erntegut undurchlässig und weist eine geschlossene Fläche auf. Es wären allerdings auch Ausgestaltungen denkbar, in denen sie beispielsweise eine Mehrzahl beabstandeter Führungselemente aufweist, die insbesondere bogenförmig ausgebildet sein können. Die Leitabdeckung könnte auch als Leithaube bezeichnet werden. Sie bildet, gegebenenfalls ergänzend zur Niederhalterwalze, einen Gegenhalter für das Erntegut und begrenzt dessen Bewegungsspielraum. Somit wird zwischen der Leitabdeckung und wenigstens einem der Rotoren ein Förderkanal für das Erntegut definiert. Durch diesen kann im Wesentlichen ein Verlust von Erntegut verhindert werden und/oder das Erntegut kann von dem entsprechenden Rotor effektiver gefördert werden.

Bevorzugt ist der Niederhalter über wenigstens einen Niederhalterträger derart aufgehängt, dass er gegenüber den Rotoren wenigstens höhenbeweglich ist. Der Niederhalterträger kann seinerseits direkt oder indirekt mit dem Fahrzeugkörper oder einem Hauptrahmen des Schwaders verbunden sein. Gemäß einer Ausgestaltung ist der Niederhalterträger beweglich mit einem Querförderrahmen der Querfördervorrichtung verbunden. Insbesondere kann er schwenkbar mit diesem verbunden sein. In jedem Fall sorgt der Niederhalterträger für eine Aufhängung des Niederhalters, die wenigstens eine Höhenbewegung relativ zu den Rotoren ermöglicht. Die Höhenbewegung kann von einer Bewegung in horizontaler Richtung überlagert sein. Über ein Federelement, beispielsweise einen Hydraulikzylinder, kann dabei eine Ruhelage des Niederhalterträgers definiert sein, aus der er ausgelenkt werden kann, beispielsweise wenn aufgrund einer größeren Erntegutmenge vor dem Aufnahmerotor die Niederhalterwalze nach oben ausweichen muss. Gleiches gilt für ein möglicherweise notwendiges Ausweichen der Leitabdeckung.

Wenngleich eine entsprechende Höhenbeweglichkeit des Niederhalters in seiner Gesamtheit vorteilhaft ist, kann ergänzend hierzu oder gegebenenfalls als Alternative vorgesehen sein, dass die Niederhalterwalze und/oder die Leitabdeckung einzeln gegenüber dem Niederhalterträger verstellbar sind. Sowohl bezogen auf die Niederhalterwalze als auch auf die Leitabdeckung kann eine vertikale Verstellung und/oder eine horizontale Verstellung möglich sein. In Bezug auf die Niederhalterwalze kann diese an einem Walzenträger angeordnet sein, der gegenüber dem Niederhalterträger translatorisch verstellbar und/oder schwenkbar sein kann. Eine manuelle Verstellbarkeit ist möglich, wobei die jeweils gewählte Position durch Festziehen einer Arretierungsschraube gesichert werden kann. Allerdings wäre auch eine aktorische Verstellbarkeit denkbar.

Gemäß einer Ausführungsform weist die Schwadereinheit eine Mehrzahl von Leitzinken auf, die sich entlang der Längsachse erstrecken und das vom Übergaberotor abgegebene Erntegut in Richtung auf die Querfördervorrichtung lenken, wobei eine Neigung der Leitzinken gegenüber der Längsachse in Richtung auf die Querachse und/oder eine Neigung der Leitzinken in Richtung auf die Hochachse einstellbar ist. Die Leitzinken sind in aller Regel bezüglich der Querachse voneinander beabstandet, das heißt es sind Zwischenräume zwischen ihnen ausgebildet. Die Leitzinken können aus Metall, gegebenenfalls aber auch aus anderen Materialien wie Kunststoff oder Verbundstoffen bestehen. Sie können aus Draht oder Stangen ausgebildet sein. Alternativ wäre auch eine Ausbildung aus Blech oder vergleichbarem flächigem Material möglich. Die Leitzinken erstrecken sich entlang der Längsachse, verlaufen allerdings im Allgemeinen nicht parallel zu dieser. Allerdings ist bevorzugt wenigstens eine Stellung vorgesehen, in der die Leitzinken parallel zur Längsebene verlaufen, also zu der Ebene, die durch Längsachse und Hochachse aufgespannt wird. Insbesondere kann der Niederhalter die Leitzinken aufweisen. Die Leitzinken können sich an die Leitabdeckung anschließen. Beispielsweise können sie beweglich, insbesondere schwenkbar, mit der Leitabdeckung verbunden sein. Die Leitzinken können teilweise zwischen sich und einem der Rotoren, insbesondere dem Übergaberotor, einen Zwischenraum definieren. Dieser kann sich an den o.g. Förderkanal anschließen oder kann auch als Teil desselben angesehen werden. Im Unterschied zu der Leitabdeckung sind die Leitzinken in der Regel derart beabstandet, dass Erntegut zwischen ihnen hindurchgelangen könnte. Dies ist allerdings in dem Bereich, in dem die Leitzinken angeordnet sind, normalerweise weniger problematisch. Insbesondere besteht in diesem Bereich in der Regel nur noch eine geringe Gefahr, dass Erntegut gänzlich verloren geht, also wieder zu Boden fällt. Normalerweise gelangt selbst das Erntegut, das zwischen den Leitzinken hindurchtritt, noch zur nachgeordneten Vorrichtung, insbesondere zu Querfördervorrichtung. Es wäre allerdings auch denkbar, oberhalb der Leitzinken noch eine Abdeckung vorzusehen, die auch als Teil der Leitabdeckung ausgebildet sein kann. Auf diese Weise könnte der Verlust von Erntegut praktisch völlig verhindert werden. Bevorzugt sind die Leitzinken wenigstens teilweise oberhalb des Übergaberotors angeordnet. Durch die Leitzinken kann das Erntegut, welches vom Übergaberotor abgegeben wird, in Richtung auf die Querfördervorrichtung gelenkt werden.

Die Leitzinken geben durch ihren Verlauf eine Bewegungsrichtung vor, der das Erntegut mit minimalem Widerstand folgen kann. Im Allgemeinen bewegt sich das Erntegut nicht exakt parallel zur Verlaufsrichtung der Leitzinken, dennoch üben sie eine leitende oder lenkende Wirkung auf das Erntegut aus. Dies kann einerseits dadurch genutzt werden, dass die Neigung der Leitzinken zur Querachse hin eingestellt wird. Das heißt die Leitzinken können unterschiedlich stark (oder auch gar nicht) zur Seite geneigt sein. Hierdurch erfährt das Erntegut, welches durch den Übergaberotor im Wesentlichen in Richtung der Längsachse sowie in Richtung der Hochachse angetrieben wird, eine seitliche Ablenkung. Man kann auch sagen, dass dem Erntegut eine Geschwindigkeitskomponente in Richtung der Querachse eingeprägt wird. Dementsprechend wird es auf der Förderfläche bezüglich der Querachse eher mittig oder eher zu einer Seite hin abgeworfen. Alternativ oder zusätzlich kann eine Neigung der Leitzinken gegenüber der Längsachse in Richtung auf die Hochachse einstellbar sein. Man kann auch sagen, dass hier eine Neigung gegenüber der horizontalen Ebene eingestellt wird. Hierdurch kann insbesondere eine Wurfweite des Übergaberotors verändert werden. Werden die Leitzinken - von vorne nach hinten gesehen - stärker abwärts geneigt, wird das Erntegut schneller und/oder stärker abwärts gelenkt, was gleichbedeutend mit einer geringeren Wurfweite ist. Werden die Leitzinken stärker aufwärts geneigt, resultiert eine größere Wurfweite. Eine individuelle Einstellbarkeit einzelner Leitzinken ist möglich. Vorteilhaft können allerdings auch alle Leitzinken an einem Zinkenträger angeordnet sein, der mitsamt den Leitzinken schwenkbar ist. Die Neigung kann manuell einstellbar sein, da sie in vielen Fällen für die Bearbeitung eines Feldes konstant gehalten werden kann. Optional könnte sie allerdings auch aktorisch einstellbar sein.

Durch die Erfindung wird des Weiteren ein Verfahren zum Betreiben eines Schwaders zur Verfügung gestellt. Der Schwader weist die Merkmale des Oberbegriffs von Anspruch 1 auf. Insbesondere kann der Schwader erfindungsgemäß ausgebildet sein, das heißt in wenigstens einer Arbeitsposition des Schwaders kann eine Normalengerade, welche senkrecht zu einem bezüglich der Längsachse mittleren Bereich der Förderfläche und durch einen bezüglich der Längsachse vordersten Punkt des Förderelements verläuft, einen Bewegungsbereich der Übergabezinken wenigstens berühren. In jedem Fall weist der Schwader wenigstens eine Schwadereinheit auf, die die Aufnahmevorrichtung und die Querfördervorrichtung aufweist. Bei dem erfindungsgemäßen Verfahren ist vorgesehen, dass wenigstens ein Betriebsparameter der Schwadereinheit angepasst wird, um eine Verteilung des Erntegutes auf der Förderfläche zu beeinflussen. Die Verteilung bezeichnet, ein wie großer Anteil des Erntegutes auf unterschiedlichen Bereichen der Förderfläche angeordnet ist. Dies kann sowohl eine Verteilung bezüglich der Längsachse betreffen als auch eine Verteilung bezüglich der Querachse. Es wird beim erfindungsgemäßen Verfahren wenigstens ein Betriebsparameter angepasst, um diese Verteilung zu beeinflussen. Hierbei kann "anpassen" insbesondere "einstellen" bedeuten, wobei der Wert des Betriebsparameters (bis auf unvermeidliche und vernachlässigbare Ungenauigkeiten) exakt festgelegt wird. In einigen Fällen lässt sich der Betriebsparameter nicht exakt festlegen, aber er kann qualitativ dahingehend angepasst werden, dass er zum Beispiel erhöht oder verringert wird.

Eine Anpassung des wenigstens einen Betriebsparameters ist i.Allg. sinnvoll oder notwendig, weil die Verteilung durch verschiedene Faktoren außerhalb der Schwadereinheit beeinflusst werden kann. Mögliche relevante Einflüsse sind Menge, Art und Beschaffenheit des Erntegutes, Feuchtigkeit, Windstärke und -richtung sowie die Fahrgeschwindigkeit des Schwaders. Auch können Faktoren innerhalb der Schwadereinheit eine Anpassung des Betriebsparameters notwendig machen, zum Beispiel derart, dass ein Betriebsparameter geändert werden muss, weil ein anderer Betriebsparameter geändert wurde. Idealerweise wird versucht, eine bestimmte Verteilung zu erreichen, was allerdings aufgrund zahlreicher Faktoren, die insbesondere auch von der Art und Beschaffenheit des Ernteguts abhängen, kaum exakt möglich ist. Die Anpassung des Parameters kann vor Inbetriebnahme des Schwaders erfolgen. Alternativ oder zusätzlich kann sie auch während des Betriebs erfolgen, wobei der Betrieb unter Umständen fortgeführt werden kann, ohne unterbrochen zu werden. Der Betriebsparameter kann manuell angepasst werden oder aktorisch. Letzteres kann automatisch erfolgen oder auf eine Benutzereingabe hin. Die Anpassung kann anhand von Erfahrungswerten oder anhand einer Berechnung erfolgen. Im einfachsten Fall erfolgt sie durch Beobachtung der sich während des Betriebs ergebenden Verteilung und Anpassung des wenigstens einen Parameters, um die Verteilung bei Bedarf zu verändern.

Bevorzugt ist vorgesehen, dass die Verteilung des Erntegutes durch wenigstens einen Sensor erfasst wird und der wenigstens eine Betriebsparameter in Abhängigkeit von der erfassten Verteilung angepasst wird. Der Sensor arbeitet bevorzugt berührungslos, so dass weder das Erntegut noch der Sensor selbst durch die Messung beeinflusst oder beeinträchtigt werden. Es kann sich insbesondere um einen optischen Sensor handeln, zum Beispiel eine Kamera, die sichtbares Licht und/oder Infrarotlicht erfasst. Es wären allerdings auch andere Sensoren einsetzbar, die zum Beispiel mit Radar, Lidar oder Ultraschall das Erntegut auf der Förderfläche erfassen könnten. Die Anpassung kann anhand der erfassten Verteilung von einem Benutzer vorgenommen werden. Es wäre aber auch möglich, dass die Anpassung zumindest teilweise automatisch erfolgt.

Insbesondere kann der wenigstens eine Parameter angepasst werden, um zu erreichen, dass das Erntegut wenigstens teilweise im bezüglich der Längsachse mittleren Bereich der Förderfläche abgelegt wird. Eine derart mittige Ablage verhindert, dass sich Erntegut im vorderen oder hinteren Bereich der Förderfläche auftürmt oder gar in größerem Umfang von der Förderfläche herunterfällt. Zum Beispiel kann versucht werden, eine Verteilung zu erreichen, bei der sich die größte Erntegutdichte (also Erntegutmasse pro Flächeneinheit) im mittleren Bereich der Förderfläche ergibt, während sie in davor und dahinter liegenden Bereichen geringer ist. Ein Ziel kann dabei vor allem sein, die gesamte Ausdehnung der Förderfläche entlang der Längsachse auszunutzen, so dass sämtliche Bereiche (zum Beispiel vorderer, mittlerer und hinterer Bereich) wenigstens teilweise mit Erntegut bedeckt sind.

Vorteilhaft wird eine Drehzahl des Übergaberotors angepasst, um die Verteilung zu beeinflussen. Eine höhere Drehzahl führt (bei ansonsten gleichbleibenden Bedingungen) dazu, dass das Erntegut den Übergaberotor früher verlässt und weiter nach oben beziehungsweise weniger weit nach unten geworfen wird. Dies wiederum hat unmittelbar Einfluss auf die Wurfweite und somit auf die Verteilung auf der Förderfläche. Qualitativ verschiebt sich die Verteilung weiter nach hinten, wenn die Drehzahl erhöht wird, und verschiebt sich nach vorne, wenn die Drehzahl verringert wird. Zudem bewirkt eine höhere Drehzahl des Übergaberotors, bei gleichbleibender Drehzahl des Aufnahmerotors, eine schnellere Abnahme von Erntegut durch den Übergaberotor. Das heißt, der Übergaberotor fördert einen schnelleren, aber weniger dichten Erntegutstrom. Hierdurch können sich unter Umständen weniger Klumpen innerhalb des Ernteguts bilden, was sich wiederum darauf auswirken kann, wie gut sich das Erntegut vom Übergaberotor löst und wie es sich im Flug zwischen Übergaberotor und Förderfläche verhält.

Eine Ausgestaltung sieht vor, dass ein zweiter Winkel, um den wenigstens der mittlere Bereich der Förderfläche gegenüber der horizontalen Ebene zur Aufnahmevorrichtung hin geneigt ist, angepasst wird, um die Verteilung zu beeinflussen. Wenigstens der mittlere Bereich der Förderfläche (vorteilhaft die Förderfläche insgesamt) verläuft also nicht horizontal, sondern kann zur Aufnahmevorrichtung geneigt werden, also in der Regel in Fahrtrichtung nach vorne. Bei dieser Ausführungsform wird der Neigungswinkel gegenüber der horizontalen Ebene angepasst, um die Verteilung des Ernteguts zu beeinflussen. Durch die Schrägstellung der Förderfläche wird verhindert, dass Erntegut, welches mit erheblicher Geschwindigkeit vom Übergaberotor abgeschleudert wird, sich zu weit nach hinten bewegt. Wird ein kleinerer zweiter Winkel eingestellt, kann sich das Erntegut mehr zum hinteren Teil der Förderfläche bewegen. Wird ein größerer zweiter Winkel eingestellt, ist die Förderfläche gewissermaßen nach vorne angestellt und hält das Erntegut eher zurück, so dass es eher im vorderen Teil der Förderfläche verbleibt. Insbesondere kann durch eine ausreichende Neigung verhindert werden, dass sich das Erntegut nur im hintersten Bereich der Förderfläche sammelt und dort eventuell auftürmt. Typischerweise kann ein zweiter Winkel zwischen 5° und 35°, bevorzugt zwischen 10° und 30°, weiter bevorzugt zwischen 15° und 25°, eingestellt werden.

Gemäß einer Ausgestaltung des Verfahrens weist die Schwadereinheit einen Niederhalter auf, wobei ein wenigstens eine Position des Niederhalters gegenüber den Rotoren angepasst wird, um die Verteilung zu beeinflussen. Der Niederhalter wurde bereits oben beschrieben. Wie bereits erwähnt, kann er u.a. je nach Position relativ zu den Rotoren bestimmen, ab welchem Punkt das Erntegut frühestens den Übergaberotor verlassen kann. Bei dieser Verfahrensvariante wird wenigstens eine Position des Niederhalters angepasst, was die Möglichkeit einschließt, dass es sich um eine Position eines Elements des Niederhalters handeln kann. Es kann sich um eine Position bezüglich der Längsachse, bezüglich der Hochachse und/oder um eine Winkelposition, also eine Neigung, handeln. Letzteres bedeutet, dass der Niederhalter oder ein Element desselben in unterschiedlicher Weise geneigt werden kann.

Bevorzugt weist der Niederhalter eine bezüglich der Längsachse wenigstens teilweise vor dem Aufnahmerotor angeordnete, drehbare Niederhalterwalze sowie eine bezüglich der Längsachse wenigstens teilweise dahinter angeordneten Leitabdeckung auf, die zwischen sich und wenigstens einem der Rotoren einen Förderkanal für Erntegut definiert, wobei eine Position der Leitabdeckung angepasst und hierdurch die Geometrie des Förderkanals verändert wird, um die Verteilung zu beeinflussen. Die Niederhalterwalze sowie die Leitabdeckung und ihre möglichen Ausgestaltungen wurden bereits oben beschrieben. Bei dieser Ausführungsform wird eine Position der Leitabdeckung gegenüber den Rotoren angepasst, was sich auf die Dimensionen des Förderkanals auswirkt. Ist der Förderkanal weiter geöffnet, kann Erntegut unter Umständen früher vom Übergaberotor abgeschleudert werden, als wenn der Förderkanal weniger weit geöffnet ist. Entsprechend ergibt sich eine größere Wurfweite, das heißt das Erntegut landet entlang der Längsachse weiter hinten auf der Förderfläche. Es kann insbesondere eine Position der Leitabdeckung unabhängig von der Niederhalterwalze angepasst werden. Dies kann zum Beispiel dann möglich sein, wenn sowohl die Leitabdeckung als auch die Niederhalterwalze an einem oben beschriebenen Niederhalterträger angeordnet sind und die Leitabdeckung einzeln gegenüber dem Niederhalterträger verstellbar ist.

Bevorzugt wird eine vertikale Position der Leitabdeckung angepasst, um die Verteilung zu beeinflussen. Dies kann insbesondere eine vertikale Position bezüglich der Rotoren sein. Es kann sich ebenfalls um eine vertikale Position bezüglich des Niederhalterträgers handeln. Durch die Veränderung der vertikalen Position wird insbesondere die Ausdehnung des Förderkanals verändert. Wird die Leitabdeckung nach unten verstellt, ergibt sich ein engerer Förderkanal, wird sie nach oben verstellt, ergibt sich ein weiterer Förderkanal.

Gemäß einer Ausführungsform weist die Schwadereinheit eine Mehrzahl von Leitzinken auf, die sich entlang der Längsachse erstrecken und das vom Übergaberotor abgegebene Erntegut in Richtung auf die Querfördervorrichtung lenken, wobei eine Neigung der Leitzinken gegenüber der Längsachse in Richtung auf die Querachse und/oder eine Neigung der Leitzinken in Richtung auf die Hochachse angepasst wird, um die Verteilung zu beeinflussen. Die Leitzinken sowie mögliche Ausgestaltungen derselben wurden bereits oben beschrieben. Bei der vorliegenden Ausführungsform kann einerseits die Neigung der Leitzinken zur Querachse hin angepasst werden. Das heißt die Leitzinken können unterschiedlich stark (oder auch gar nicht) zur Seite geneigt werden, wodurch eine seitliche Ablenkung des Ernteguts, angepasst wird. Dementsprechend wird es auf der Förderfläche bezüglich der Querachse eher mittig oder eher zu einer Seite hin abgeworfen. Alternativ oder zusätzlich kann eine Neigung der Leitzinken gegenüber der Längsachse in Richtung auf die Hochachse angepasst werden.

Eine weitere Option besteht darin, dass eine Fördergeschwindigkeit der Querfördervorrichtung angepasst wird, um die Verteilung zu beeinflussen. Beispielsweise kann eine Umlaufgeschwindigkeit eines Förderbandes angepasst werden. Fördert die Querfördervorrichtung schneller, wird das Erntegut entsprechend schneller seitwärts forttransportiert, was insbesondere bei großen Erntegutmengen die Gefahr mindert, dass sich Erntegut auf der Förderfläche anhäuft oder auftürmt. Qualitativ wird das Erntegut durch eine größere Fördergeschwindigkeit ausgedünnt, während es bei einer niedrigeren Fördergeschwindigkeit dichter liegt.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine perspektivische Ansicht einer als Schwader ausgebildeten erfindungsgemäßen Schwader;
- Fig. 2: eine Seitenansicht einer Schwadereinheit des Schwaders aus Fig. 1;
- Fig. 3: eine seitliche Schnittdarstellung eines Teils der Schwadereinheit aus Fig. 2;
- Fig. 4: eine perspektivische Ansicht einer Aufnahmevorrichtung der Schwadereinheit aus Fig.2;
- Fig. 5: eine perspektivische Ansicht eines Teils der Schwadereinheit aus Fig.2;
- Fig. 6A, 6B: Seitenansichten eines Teils der Schwadereinheit aus Fig.2; sowie
- Fig. 7: eine perspektivische Darstellung eines Teils eines Niederhalters der Schwadereinheit aus Fig. 2.

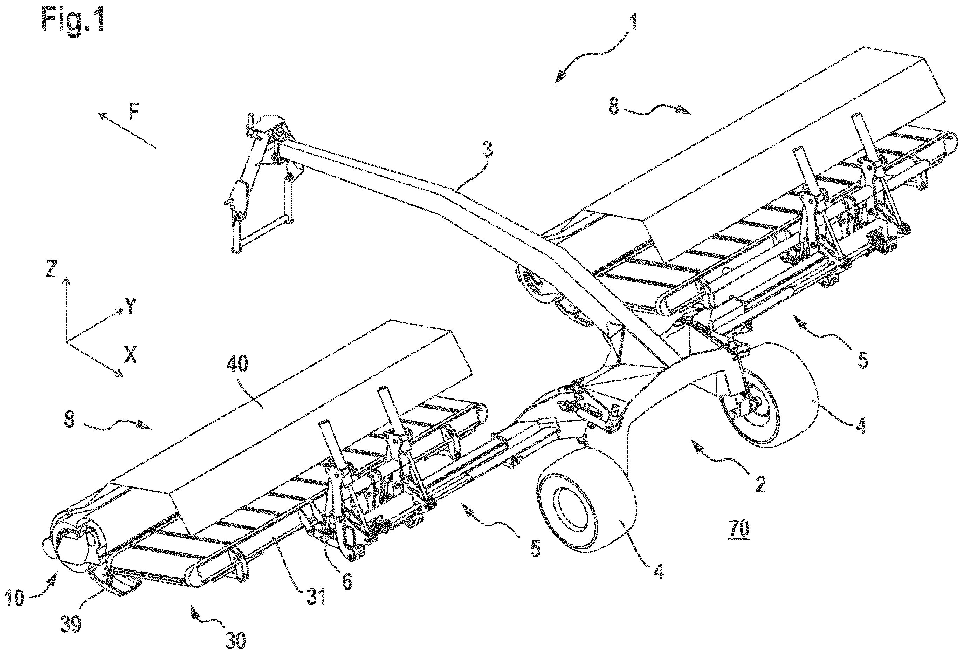

Fig. 1 zeigt einen erfindungsgemäßen Schwader 1, der dazu vorgesehen ist, von einem hier nicht dargestellten Schlepper gezogen zu werden. Der Schwader 1 weist einen Hauptrahmen 2 auf, der über zwei Räder eines Fahrwerks 4 an einem Boden 70 abstützbar ist. Außerdem weist der Hauptrahmen 2 eine in einer Fahrtrichtung F nach vorne weisende, sich entlang einer Längsachse X erstreckende Deichsel 3 auf, über welche er an den Schlepper angekoppelt wird. Parallel zu einer Querachse Y erstrecken sich beiderseits des Hauptrahmens 2 zwei Seitenausleger 5, an denen jeweils eine Schwadereinheit 8 angeordnet ist. Die beiden Schwadereinheiten 8 sowie ihre Verbindung mit dem Hauptrahmen 2 sind identisch beziehungsweise spiegelsymmetrisch, weshalb nachfolgend nur jeweils eine Schwadereinheit 8 betrachtet wird.

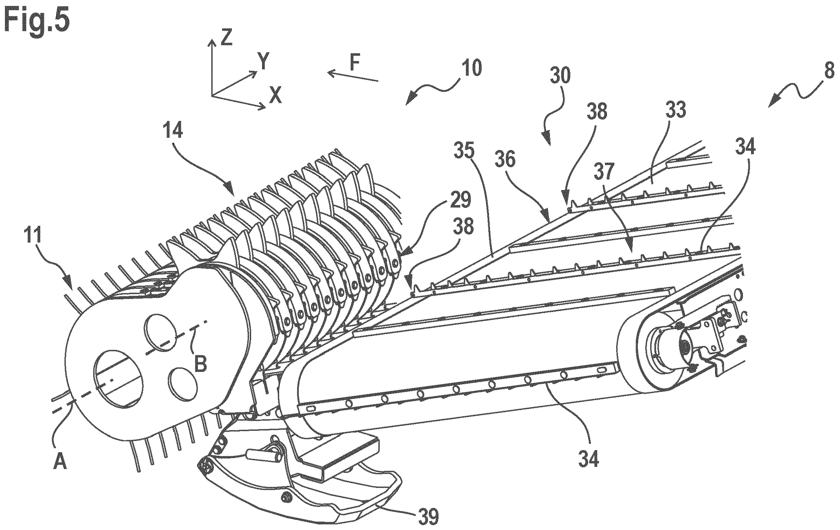

Die Schwadereinheit 8 weist eine Aufnahmevorrichtung 10 auf sowie eine bezüglich der Längsachse X dahinter angeordnete Querfördervorrichtung 30. Wenn der Schwader 1 in Fahrtrichtung F gezogen wird, nimmt die Aufnahmevorrichtung 10 Erntegut vom Boden 70 auf und übergibt es an die Querfördervorrichtung 30. Die Querfördervorrichtung 30 weist einen Querförderrahmen 31 sowie ein daran umlaufend antreibbares Förderband 32 auf. Das Erntegut auf einer Förderfläche 36 aufgenommen, durch das Förderband 32 bezüglich der Querachse Y seitwärts gefördert und schwadweise auf dem Boden 70 abgelegt. Fig. 1 zeigt eine Konfiguration des Schwaders 1, die für eine Ablage des Erntegutes nach innen, also zur Mittelebene des Schwaders 1, vorgesehen ist. Dabei sind die beiden Schwadereinheiten 8 entlang der Querachse Y deutlich beabstandet und die Förderbänder 32 werden so betrieben, dass sie das Erntegut jeweils zur Mitte hin fördern. In einer alternativen, hier nicht dargestellten Arbeitskonfiguration können die Schwadereinheiten 8 an den Seitenauslegern 5 zur Mitte hin verstellt werden, so dass sie unmittelbar benachbart zueinander angeordnet sind. Die Schwadereinheit 8 ist in hier nicht vollständig erläuterter Weise gegenüber dem Hauptrahmen 2 beweglich aufgehängt. Wie in Fig. 5A und 5B erkennbar ist, ist der Querförderrahmen 31 über einen Oberlenkeraktor 61, zwei Unterlenker 62 sowie zwei Unterlenkeraktoren 63 mit einem Aufhängungsrahmen 6 verbunden, der seinerseits am Seitenausleger 5 angeordnet ist. Insbesondere ist die Schwadereinheit 8 höhenbeweglich und kann über Bodenführungselemente 39 das Profil des Bodens 70 abtasten und diesem folgen.

Die Aufnahmevorrichtung 10 weist einen um eine erste Drehachse A drehend antreibbaren Aufnahmerotor 11 auf, der dicht über dem Boden 70 entlang diesem geführt wird, sowie einen gleichsinnig hierzu um eine zweite Drehachse B drehend antreibbaren Übergaberotor 14, der bezüglich der Längsachse X nach hinten sowie bezüglich einer Hochachse Z nach oben gegenüber dem Aufnahmerotor 11 versetzt ist. In den Figuren verlaufen die Drehachsen A, B parallel zur Querachse Y, was der Ausrichtung auf einem ebenen, horizontal ausgerichteten Boden 70 entspricht. Aufgrund der erwähnten Beweglichkeit der Schwadereinheit 8 kann sich die Ausrichtung der Drehachsen A, B zeitweise von der Querachse Y unterscheiden, normalerweise aber um einen insbesondere kleinen Winkel von höchstens 20°. Es ist auch möglich, dass nicht nur die Schwadereinheit 8 insgesamt beweglich ist, sondern auch, dass die Aufnahmevorrichtung 10 entlang der Querachse Y in zwei Teileinheiten aufgeteilt ist, die gegeneinander verkippen können, um sich an Bodenunebenheiten anzupassen. In diesem Fall kann jede der Drehachsen in den beiden Teileinheiten unterschiedlich verlaufen, wobei sich allerdings typischerweise ebenfalls Abweichungen von weniger als 20° ergeben.

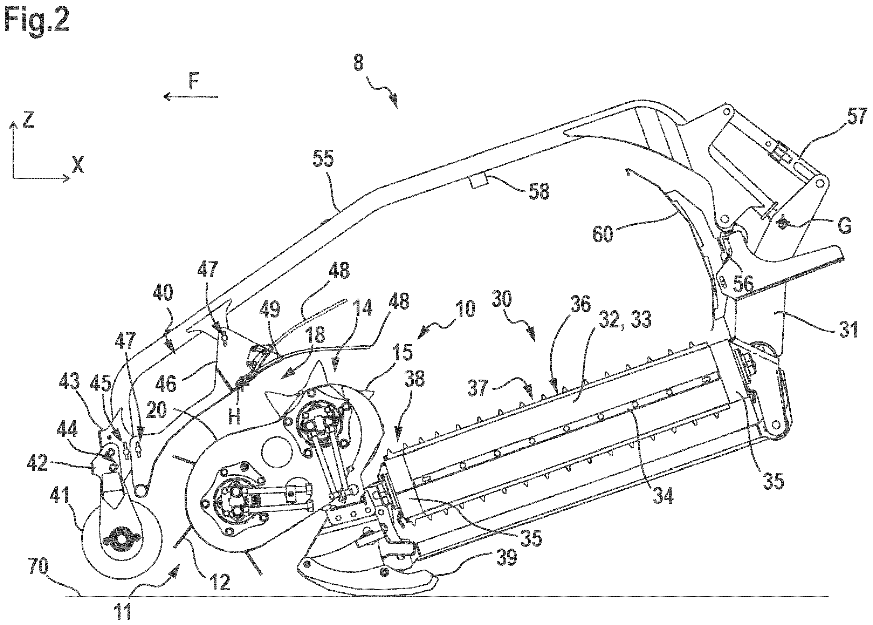

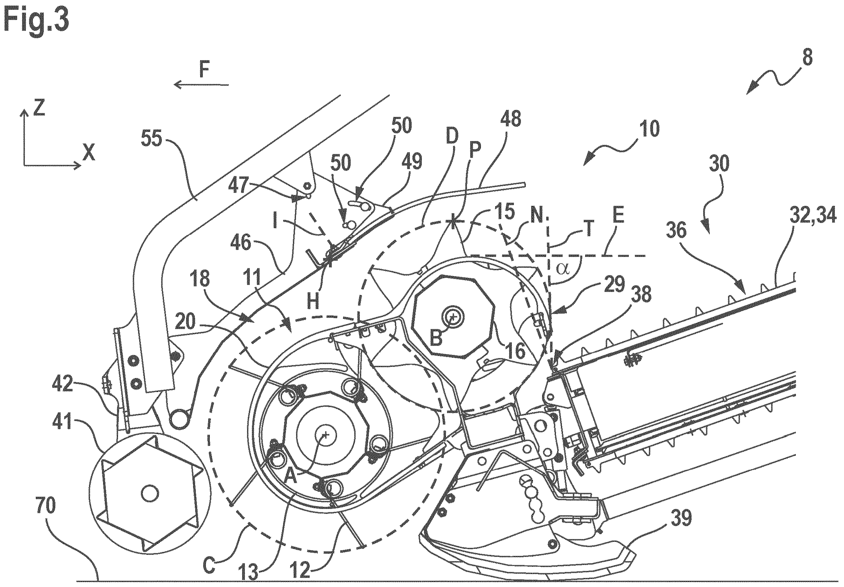

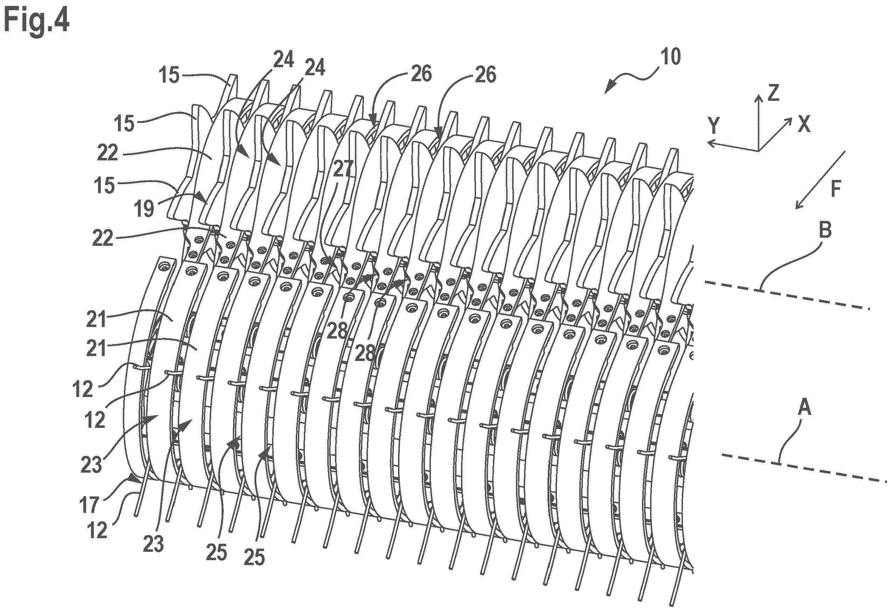

Die Funktion der Aufnahmevorrichtung 10 besteht darin, Erntegut vom Boden 70 aufzunehmen und an die Querfördervorrichtung 30 zu übergeben. Genauer gesagt nimmt der Aufnahmerotor 11 das Erntegut auf und übergibt es an den Übergaberotor 14, der es seinerseits an die Querfördervorrichtung 30 übergibt. Der Aufnahmerotor 11 weist eine Mehrzahl von Aufnahmezinken 12 auf, die vorliegend aus Federdraht gebildet sind. Sie sind auf einem in Fig. 2 sichtbaren Rotorkern 13 angeordnet. Wie beispielsweise in Fig. 4 und 5 erkennbar ist, sind die Aufnahmezinken 12 in einer Mehrzahl von Zinkenkränzen gruppiert, die entlang der Querachse Y beabstandet sind. Der Übergaberotor 14 weist eine Mehrzahl von Übergabezinken 15 auf, die durch Segmente aus Metallblech oder aber Kunststoff gebildet sein können. Auch diese sind in Zinkenkränzen gruppiert und auf einem Rotorkern 16 angeordnet. In Fig. 1 sind aus Gründen der Übersichtlichkeit statt der jeweiligen Zinken 12, 15 jeweils nur ihre zylindrischen Bewegungsbereiche C, D dargestellt. Wie aus Fig. 3 hervorgeht, überlappt ein erster Bewegungsbereich C der Aufnahmezinken 12 in Richtung der Querachse Y (welche senkrecht zur Zeichenebene in Fig. 3 verläuft) mit einem zweiten Bewegungsbereich D der Übergabezinken 15. Dies wird dadurch ermöglicht, dass die Übergabezinken 15 in Richtung der Querachse Y zu den Aufnahmezinken 12 versetzt angeordnet sind und somit in Zwischenräume zwischen den jeweiligen Aufnahmen Zinken 12 eingreifen können. Dieser Sachverhalt geht insbesondere aus Fig. 4 hervor.

Die Aufnahmevorrichtung 10 weist des Weiteren eine Abstreifvorrichtung 20 auf, die aus metallischen Abstreiferelementen 21, 22 gebildet ist. Die Abstreifvorrichtung 20 definiert entlang der Querachse Y zwischen den Aufnahmezinken 12 angeordnete Aufnahmezinken-Abstreiferabschnitte 23 sowie entlang der Querachse Y zwischen den Übergabezinken 15 angeordnete Übergabezinken-Abstreiferabschnitte 24. Bei dieser Ausführungsform wird der jeweilige Aufnahmezinken-Abstreiferabschnitt 23 im Wesentlichen durch ein erstes Abstreiferelement 21 gebildet, während der jeweilige Übergabezinken-Abstreiferabschnitt 24 im Wesentlichen durch ein zweites Abstreiferelement 22 gebildet wird, das sich jeweils nahezu lückenlos an ein erstes Abstreiferelement 21 anschließt. Es wären allerdings auch andere Ausgestaltung möglich. Die Aufnahmezinken 12 bewegen sich jeweils durch Aufnahmezinken-Zwischenräume 25, die zwischen zwei Aufnahmezinken-Abstreiferabschnitten 23 ausgebildet sind. Die Übergabezinken 15 bewegen sich durch Übergabezinken-Zwischenräume 26, die zwischen jeweils zwei Übergabezinken-Abstreiferabschnitten 24 ausgebildet sind. Jeweils ein Aufnahmezinken-Zwischenraum 25 geht in einem Übergangsbereich 27 in einen Übergabezinken-Zwischenraum 26 über. Im Zuge ihrer Rotationsbewegung ziehen sich die Aufnahmezinken 12 im Übergangsbereich 27 auf eine Innenseite der Abstreifvorrichtung 20 zurück, während sich die Übergabezinken 15 im Übergangsbereich 27 von der Innenseite der Abstreifvorrichtung 20 zur Außenseite hin bewegen. Am Übergangsbereich 27 weist die Abstreifvorrichtung 20 eine Leitkante 28 auf, die den Aufnahmezinken-Zwischenraum 25 begrenzt. Diese Leitkante 28 ist gegenüber einer zur ersten Drehachse A des Aufnahmerotors 11 senkrechten Rotationsebene in Richtung auf den benachbarten Übergabezinken-Zwischenraum 26 zur Drehachse A hin geneigt. Somit wird Erntegut, das sich zwischen dem zur Innenseite abtauchenden Aufnahmezinken 12 und der Leitkante 28 befindet, seitlich in Richtung des Übergabezinken-Zwischenraums 26 und somit in Richtung des Übergaberotors 14 gelenkt. In einem Eintauchbereich 29, welcher bezüglich der Längsachse X rückwärtig der Abstreifvorrichtung 20 angeordnet ist, ziehen sich die Übergabezinken 15 wieder zwischen die Übergabezinken-Abstreiferabschnitte 24 zurück.

Da der Übergaberotor 14 wenigstens teilweise höher angeordnet ist als der Aufnahmerotor 11, erfolgt insgesamt ein zweistufiges Anheben des Erntegutes bezüglich der Hochachse Z. Das Erntegut, welches in einer bestimmten Dicke auf dem Boden 70 liegt, wird zunächst von den Aufnahmezinken 12 erfasst und durch diese aufwärts und anteilig entlang der Längsachse X nach hinten gefördert. Es wird zum Teil durch die Abstreifvorrichtung 20 abgestreift, zum Teil wird es allerdings auch direkt durch die Übergabezinken 15 des Übergaberotors 14 übernommen. In jedem Fall erfolgt letztendlich eine Übernahme des Erntegutes durch den Übergaberotor 14, der das Erntegut wiederum bezüglich der Hochachse Z anhebt und bezüglich der Längsachse X nach hinten fördert. Insgesamt kann das Erntegut in eine vergleichsweise große Höhe über dem Boden 70 gebracht werden, während der Aufnahmerotor 11 vergleichsweise klein ist, wobei der Bewegungsbereich C eines Aufnahmezinkens 12 beispielsweise einen Durchmesser von 60 cm hat. Dies wiederum führt dazu, dass die Aufnahmezinken 12 das Erntegut in einer Bewegungsphase erfassen, in welcher sie sich bereits überwiegend aufwärts bewegen und nicht vorrangig in Fahrtrichtung F nach vorne. Daher wird zumindest weitgehend verhindert, dass der Aufnahmerotor 11 das Erntegut nach vorne schleudert oder lediglich vor sich her schiebt. Die so insgesamt erreichte große Förderhöhe ist wiederum vorteilhaft für die Übergabe des Ernteguts an die Querfördervorrichtung 30. Die Förderhöhe wird auch dadurch erreicht, dass der Übergaberotor wenigstens teilweise oberhalb der Förderfläche 36 angeordnet ist.

Wie aus Fig. 2, 3 und 4 hervorgeht, weist das Förderband 32 einen flexiblen Bandkörper 33 auf sowie eine Mehrzahl von starren Förderleisten 34, die mit dem Bandkörper 33 verbunden sind. In diesem Ausführungsbeispiel überragen die Förderleisten 34 den Bandkörper teilweise nach vorne hin und bilden einen bezüglich der Längsachse X vordersten Punkt 38 des Förderbandes 32. Dieser ist oberhalb eines Seitenblechs 35 angeordnet, welches starr mit dem Querförderrahmen 31 verbunden ist und teilweise unterhalb des Bandkörpers 33 angeordnet ist und diesen stützt. Da Erntegut in diesem Bereich auch noch von den Förderleisten 34 erfasst wird, bildet dieser Bereich - zusammen mit dem Bandkörper 33 - einen Teil der Förderfläche 36. Wie in Fig.3 erkennbar ist, schneidet eine Normalengerade N, die senkrecht zu einem mittleren Bereich 37 der Förderfläche 36 und durch den vordersten Punkt 38 verläuft, den Bewegungsbereich D der Übergabezinken 15. Außerdem ist eine Tangentiale T an den Bewegungsbereich D, die durch den vordersten Punkt 38 verläuft, um einen ersten Winkel α von ca. 87° gegenüber einer horizontalen Ebene E geneigt. Dieser erste Winkel α wird ausgehend von der horizontalen Ebene E im Drehsinn des Übergaberotors 14 gemessen. Sowohl die Anordnung der Normalengeraden N als auch die starke Neigung der Tangentialen T sind Anzeichen dafür, dass das Erntegut relativ weit von den Übergabezinken 15 mitgeführt werden kann und dennoch sicher auf der Förderfläche 36 aufgenommen wird. Ein weiterer Aspekt ist in diesem Zusammenhang, dass der Eintauchbereich 29 um ca. 93° gegenüber einem bezüglich der Hochachse Z obersten Punkt P des Bewegungsbereichs D versetzt ist. Dieser Eintauchbereich 29, in welchem eventuell noch an den Übergabezinken 15 anhaftendes Erntegut spätestens abgestreift wird, ist vertikal über der Förderfläche 36 angeordnet. Das heißt, selbst dieses Erntegut landet normalerweise zuverlässig auf der Förderfläche 36. Dabei wird es abgeworfen und nicht einfach auf die Förderfläche 36 geschoben oder gedrückt. Durch das Abwerfen ist die Gefahr einer Beschädigung gegenüber dem Aufschieben oder Drücken verringert.

Im Rahmen eines erfindungsgemäßen Verfahrens können verschiedene Betriebsparameter der Schwadereinheit 8 angepasst werden, um eine Verteilung des Ernteguts auf der Förderfläche 36 zu optimieren. Dabei soll vor allem erreicht werden, dass das Erntegut wenigstens teilweise auf den mittleren Bereich 37 abgeworfen wird. Auch ist eine gleichmäßige Verteilung des Ernteguts auf der Förderfläche 36 wünschenswert, um ein möglicherweise zur Beschädigung des Ernteguts führendes Anhäufen zu verhindern. Die aktuelle Verteilung kann über einen Sensor 58, in diesem Fall eine Kamera, erfasst werden. Es sind unterschiedliche Optionen zur Anpassung von Betriebsparametern gegeben, die nachfolgend erläutert werden.

Sowohl die Drehzahl des Aufnahmerotors 11 als auch die des Übergaberotors 14 können eingestellt werden, und zwar unabhängig voneinander. Die Drehzahl des Aufnahmerotors 11 kann insbesondere in Abhängigkeit von der Fahrgeschwindigkeit des Schwaders 1 sowie der Menge und gegebenenfalls Beschaffenheit des Ernteguts auf dem Boden 70 eingestellt werden. Aus der Drehzahl des Aufnahmerotors 11 ergibt sich normalerweise eine sinnvolle Mindestdrehzahl des Übergaberotors 14, die notwendig ist, um das übernommene Erntegut schnell genug weiterzutransportieren. Darüber hinaus kann die Drehzahl des Übergaberotors 14 in Abhängigkeit von weiteren Faktoren ausgewählt werden, insbesondere um die Verteilung des Ernteguts auf der Förderfläche 36 zu beeinflussen. Sie kann so gewählt werden, dass das Erntegut sich teilweise durch die Fliehkraft vom Übergaberotor 14 lösen kann und somit nicht einfach abgestreift wird, sondern geworfen beziehungsweise geschleudert wird. Auf diese Weise fällt das Erntegut nicht nur einfach herab, wo es auf einem zur Aufnahmevorrichtung 10 benachbarten Bereich der Förderfläche 36 landen würde, also nahe dem vordersten Punkt 38. Vielmehr wird das Erntegut auch und insbesondere bevorzugt überwiegend zum mittleren Bereich 37 der Förderfläche 36 und auch teilweise zu dem der Aufnahmevorrichtung 10 gegenüberliegenden Ende hin geworfen. Im Allgemeinen verlagert sich die Verteilung des Erntegutes bezüglich der Längsachse X weiter nach hinten, wenn die Drehzahl des Übergaberotors 14 erhöht wird.

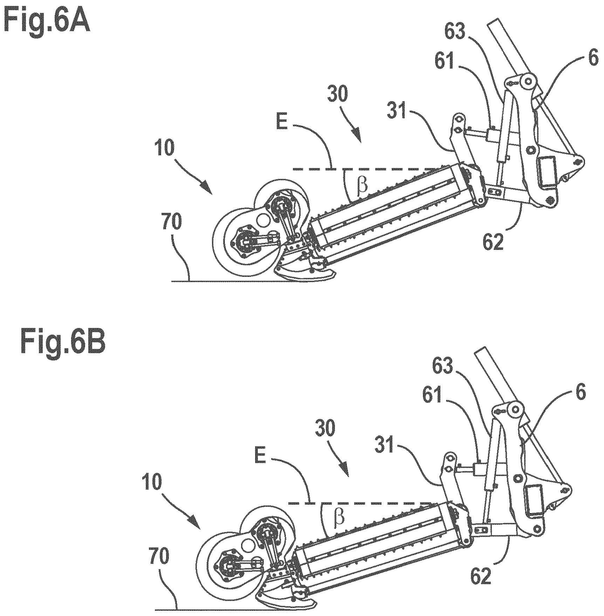

Um zu verhindern, dass das Erntegut zu weit bezüglich der Längsachse X nach hinten gelangt, ist zum einen die Förderfläche 36 gegenüber der horizontalen Ebene E nach vorne in Richtung auf die Aufnahmevorrichtung 10 zu geneigt, wobei die Schwadereinheit 8 als zusätzliche Maßnahme rückseitig der Querfördervorrichtung 30 ein Prallblech 60 aufweist. Wie aus Fig. 6A und 6B hervorgeht, kann ein zweiter Winkel β der Förderfläche 36 gegenüber der horizontalen Ebene E angepasst werden, indem der Oberlenkeraktor 61 sowie die Unterlenkeraktoren 63 unterschiedlich angesteuert werden. Fig. 6A zeigt einen zweiten Winkel β von ca. 22°, während Fig. 6B einen Neigungswinkel von ca. 17° zeigt. In Fig. 6B sind im Vergleich zu Fig. 6A der Oberlenkeraktor 61 eingefahren und die Unterlenkeraktoren 63 ausgefahren, wobei die Unterlenker 62 abwärts schwenken. Der größere zweite Winkel β in Fig. 6A führt qualitativ dazu, dass sich die Verteilung des Ernteguts in Fahrtrichtung F nach vorne verlagert.

Um die effiziente Aufnahme und Förderung des Erntegutes zu unterstützen, weist die Schwadereinheit 8 außerdem einen Niederhalter 40 auf. Dieser ist über einen Niederhalterträger 55 mit dem Querförderrahmen 31 verbunden. In Fig. 1 sind Niederhalter 40 und Niederhalterträger 55 nur schematisch dargestellt, während ihre genaue Struktur aus Fig. 2, 3 und 7 hervorgeht. Der Niederhalter 40 weist eine Niederhalterwalze 41 auf, die drehbar an einem Walzenträger 42 gelagert ist, der seinerseits über ein Zwischenelement 44 mit dem Niederhalterträger 55 verbunden ist. Dabei ist eine Position des Walzenträgers 42 am Niederhalterträger 55 veränderbar. Zum einen ist hierfür eine erste Verstellführung 44 vorgesehen, die aus einem Langloch im Walzenträger 42 und einer durch dieses hindurchgeführten, mit dem Zwischenelement 43 verbundenen Schraube gebildet ist. Durch Lösen der Schraube kann der Walzenträger 42 gegenüber dem Zwischenelement 43 geschwenkt werden, wodurch im Wesentlichen eine Position der Niederhalterwalze 41 in Richtung der Längsachse X verändert werden kann, bevor die Schraube wieder festgezogen wird. Über eine zweite Verstellführung 45 kann das Zwischenelement 43 zusammen mit dem Walzenträger 42 und der Niederhalterwalze 41 in der Höhe verstellt werden. Die Niederhalterwalze 41 sorgt zum einen dafür, dass sich das Erntegut vor dem Aufnahmerotor 11 nicht zu hoch auftürmen kann. Zum anderen bildet sie einen Gegenhalter für bereits vom Aufnahmerotor 11 erfasstes Erntegut. Oberhalb sowie bezüglich der Längsachse X hinter der Niederhalterwalze schließt sich eine Leitabdeckung 46 an, die als Leitblech ausgebildet ist. Die Leitabdeckung 46 ist für Erntegut undurchlässig und definiert zwischen sich und den Rotoren 11, 14 einen Förderkanal 18. Sie verhindert, dass sich Erntegut frühzeitig von einem der Rotoren 11, 14 löst.

Auch die Leitabdeckung 46 ist verstellbar mit dem Niederhalterträger 55 verbunden, wozu dritte Verstellführungen 47 vorgesehen sind. Schließlich ist der Niederhalterträger 55 mit dem Niederhalter 40 insgesamt um eine Schwenkachse G gegenüber dem Querförderrahmen 31 schwenkbar. Seine Schwenkstellung kann über einen Hydraulikzylinder 56 beeinflusst werden. Hierdurch ist zum Beispiel eine Anpassung an die aktuelle Erntegutmenge oder -beschaffenheit möglich. Über einen Schwenkbegrenzer 57, welcher zwischen Niederhalterträger 55 und Querförderrahmen 31 zwischengeordnet ist, kann ein Bewegungsspielraum des Niederhalterträgers 55 eingestellt werden. Sowohl durch die Anpassung der Schwenkstellung des Niederhalterträgers 55 und die hiermit verbundene Veränderung der Position des Niederhalters 40 insgesamt, als auch durch die Anpassung der Position, insbesondere der vertikalen Position, der Leitabdeckung 46 kann die Weite des Förderkanals 18 beeinflusst werden. Auch dies kann wiederum die Verteilung des Ernteguts auf der Förderfläche 36 beeinflussen.

Mit der Leitabdeckung 46 sind eine Mehrzahl von Leitzinken 48 verbunden, die sich bezüglich der Längsachse X nach hinten erstrecken. Sie können aus Draht, beispielsweise Federdraht, ausgebildet sein. Sie sind in ihrer Gesamtheit an einem Zinkenträger 49 angeordnet, der um eine parallel zur Querachse Y verlaufende Schwenkachse H gegenüber dem Leitabdeckung schwenkbar ist. Dies wird durch vierte Verstellführungen 50 realisiert. Indem die Neigung der Leitzinken 48 gegenüber der horizontalen Ebene E verändert wird, kann die Wurfweite des Erntegutes wesentlich beeinflusst werden. In Fig. 2 ist durch eine durchgezogene Linie eine minimale Neigung dargestellt, die bei ansonsten gleichen Parametern die geringste Wurfweite erzeugt, sowie durch eine punktierte Linie eine maximale Neigung, die zu einer maximalen Wurfweite führt. Die jeweils geeignete Einstellung hängt von verschiedenen Parametern ab, insbesondere der Drehzahl des Übergaberotors 14 und der Beschaffenheit des Erntegutes. Die Neigung kann angepasst werden, um die Verteilung des Ernteguts auf der Förderfläche 36 zu beeinflussen.

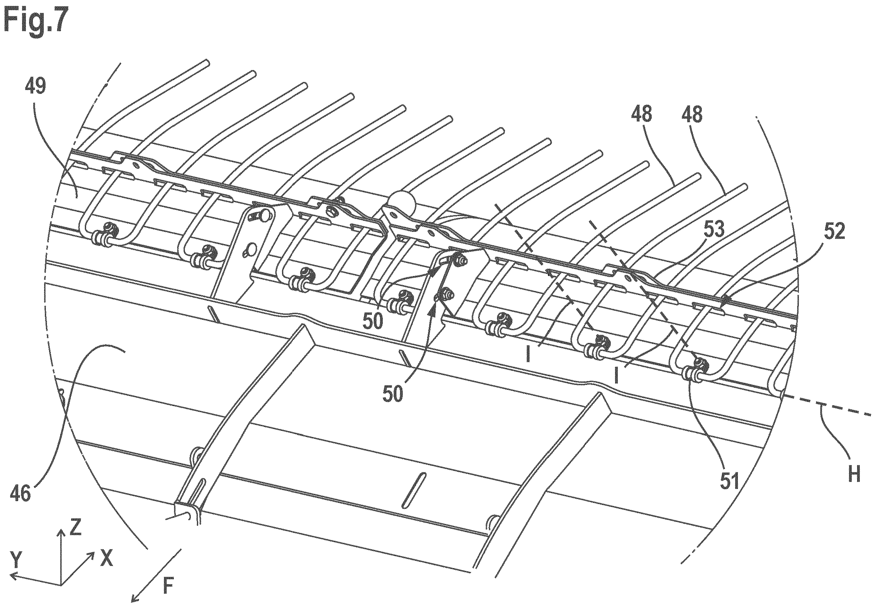

Durch ihre parallele, langgestreckte Struktur, die in Fig. 7 gut erkennbar ist, beschränken die Leitzinken nicht nur die Flugbahn des Erntegutes bezüglich der Hochachse Z, sondern sie beeinflussen auch die Bewegung des Erntegutes entlang der Querachse Y. In Fig. 6 ist jeder Leitzinken 48 parallel zu einer durch die Längsachse X und die Hochachse Y aufgespannten Längsebene angeordnet. Allerdings ist ihre Neigung in Richtung der Querachse Y veränderbar. Bei der hier dargestellten Ausführungsform sind jeweils zwei benachbarte Leitzinken 48 einstückig miteinander verbunden und über eine Schlauchschelle 51 am Zinkenträger 49 befestigt. Die Schlauchschelle 51 ist um eine Schwenkachse I schwenkbar. Jeder Leitzinken 48 ist zum einen durch ein am Zinkenträger 49 ausgebildetes, sich parallel zur Querachse Y erstreckendes Langloch 52 geführt sowie andererseits durch einen in den Figuren nicht erkennbares Loch in einer Stellblende 53, die über Schrauben am Zinkenträger 49 arretiert werden kann. Indem die Stellblende 53 parallel zur Querachse Y verschoben wird, kann die Neigung einer Mehrzahl von Paaren von Leitzinken 48 gleichzeitig eingestellt werden. Die Neigung kann dabei an die aktuell gewählte Fördererrichtung der Querfördervorrichtung 30 angepasst werden. Das heißt, wenn die Querfördervorrichtung 30 aktuell in Fahrtrichtung F gesehen nach links fördert, wird die Neigung der Leitzinken 48 so angepasst, dass sich ihre Spitzen nach links verlagern. Auf diese Weise erhält das Erntegut bereits vor dem Erreichen der Förderfläche 36 eine Geschwindigkeitskomponente in die vorgesehene Richtung, was den Abtransport durch die Querfördervorrichtung 30 unterstützt und beschleunigt. In jedem Fall beeinflusst die Neigung der Leitzinken 8 zur Querachse Y die Verteilung des Ernteguts auf der Förderfläche 36.

Eine weitere Möglichkeit zur Beeinflussung der Verteilung des Ernteguts auf der Förderfläche 36 besteht in einer Anpassung einer Fördergeschwindigkeit des Förderbandes 32. Bewegt sich das Förderband 32 schneller, wird das Erntegut entsprechend schneller seitwärts forttransportiert, was insbesondere bei großen Erntegutmengen die Gefahr mindert, dass sich Erntegut auf der Förderfläche 36 anhäuft oder auftürmt.

## Patentansprüche

1. Schwader (1) mit wenigstens einer Aufnahmevorrichtung (10), die einen Aufnahmerotor (11) und einen Übergaberotor (14) aufweist, welche um Drehachsen (A, B), die sich wenigstens überwiegend entlang einer Querachse (Y) erstrecken, gleichsinnig antreibbar sind, wobei der Aufnahmerotor (11) dazu eingerichtet ist, landwirtschaftliches Erntegut mittels Aufnahmezinken (12) vom Boden (70) aufzunehmen, bezüglich einer Hochachse (Z) anzuheben und an den Übergaberotor (14) zu übergeben, der wenigstens teilweise höher angeordnet ist als der Aufnahmerotor (11) und dazu eingerichtet ist, das Erntegut mittels Übergabezinken (15) zu übernehmen, es wenigstens anfänglich bezüglich der Hochachse (Z) anzuheben und es an eine nachgeordnete Querfördervorrichtung (30) zu übergeben, welche bezüglich einer Längsachse (X) wenigstens teilweise hinter der Aufnahmevorrichtung (10) angeordnet und dazu eingerichtet ist, das vom Übergaberotor (14) übergebene Erntegut auf einer Förderfläche (36) aufzunehmen, mittels eines Förderelements (32) entlang der Querachse (Y) zu fördern und schwadweise auf dem Boden (70) abzulegen, wobei der Übergaberotor (14) dazu eingerichtet ist, das Erntegut bezüglich der Hochachse (Z) wenigstens teilweise oberhalb der Förderfläche (36) abzugeben und auf diese abzuwerfen,
**dadurch gekennzeichnet, dass**
in wenigstens einer Arbeitsposition des Schwaders (1) eine Normalengerade (N), welche senkrecht zu einem bezüglich der Längsachse (X) mittleren Bereich (37) der Förderfläche und durch einen bezüglich der Längsachse (X) vordersten Punkt (38) des Förderelements (32) verläuft, einen Bewegungsbereich (D) der Übergabezinken (15) wenigstens berührt.

2. Schwader nach Anspruch 1, **dadurch gekennzeichnet, dass** die Übergabezinken (15) derart zwischen die Aufnahmezinken (12) eingreifen, dass sich Bewegungsbereiche (C, D) von Übergabezinken (15) und von Aufnahmezinken (12), entlang der Querachse (Y) gesehen, überlappen.

3. Schwader nach einem der vorangehenden Ansprüche, **dadurch gekennzeichnet, dass** die Aufnahmevorrichtung (10) eine Abstreifvorrichtung (20) aufweist mit Aufnahmezinken-Abstreiferabschnitten (23) und bezüglich der Querachse (Y) dazwischen ausgebildeten Aufnahmezinken-Zwischenräumen (25), durch welche die Aufnahmezinken (12) wenigstens teilweise hindurchragen, sowie Übergabezinken-Abstreiferabschnitten (24) und dazwischen ausgebildete Übergabezinken-Zwischenräumen (26), durch welche die Übergabezinken (15) wenigstens teilweise hindurchragen, wobei die Übergabezinken-Abstreiferabschnitte (24) derart ausgebildet sind, dass die Übergabezinken (15) entsprechend einer Rotation des Übergaberotors (14) zwischen ihnen eintauchen.

4. Schwader nach einem der vorangehenden Ansprüche, **dadurch gekennzeichnet, dass** ein Eintauchbereich (29), in welchem die Übergabezinken (15) vollständig zwischen den Übergabezinken-Abstreiferabschnitten (24) eintauchen, in wenigstens einer Arbeitsposition des Schwaders (1) vertikal über der Förderfläche (36) angeordnet ist.

5. Schwader nach einem der vorangehenden Ansprüche, **dadurch gekennzeichnet, dass** der Eintauchbereich (29) bezüglich einer Drehachse (B) des Übergaberotors (14) um über 70° gegenüber einem obersten Punkt (P) des Bewegungsbereichs (D) der Übergabezinken (15) versetzt ist.

6. Schwader nach dem Oberbegriff von Anspruch 1 oder nach einem der vorangehenden Ansprüche, **dadurch gekennzeichnet, dass** in wenigstens einer Arbeitsposition des Schwaders (1) eine Tangentiale (T) an den Bewegungsbereich (D) der Übergabezinken (15), welche durch einen bezüglich der Längsachse (X) vordersten Punkt (38) des Förderelements (32) verläuft, mit einer horizontalen Ebene einen ersten Winkel (α) einschließt, der, ausgehend von der horizontalen Ebene im Rotationssinn des Übergaberotors (14) gemessen, wenigstens 60° beträgt.

7. Verfahren zum Betreiben eines Schwaders nach dem Oberbegriff von Anspruch 1 oder einem der vorangehenden Ansprüche, wobei der Schwader (1) wenigstens eine Schwadereinheit (8) aufweist, die die Aufnahmevorrichtung (10) und die Querfördervorrichtung (30) aufweist, **dadurch gekennzeichnet, dass** wenigstens ein Betriebsparameter der Schwadereinheit (8) angepasst wird, um eine Verteilung des Erntegutes auf der Förderfläche (36) zu beeinflussen.

8. Verfahren nach Anspruch 7, **dadurch gekennzeichnet, dass** die Verteilung des Erntegutes durch wenigstens einen Sensor (58) erfasst wird und der wenigstens eine Betriebsparameter in Abhängigkeit von der erfassten Verteilung angepasst wird.

9. Verfahren nach einem der Ansprüche 7 oder 8, **dadurch gekennzeichnet, dass** der wenigstens eine Parameter angepasst wird, um zu erreichen, dass das Erntegut wenigstens teilweise in einem bezüglich der Längsachse (X) mittleren Bereich (37) der Förderfläche (36) abgelegt wird.

10. Verfahren nach einem der Ansprüche 7 bis 9, **dadurch gekennzeichnet, dass** eine Drehzahl des Übergaberotors (14) angepasst wird, um die Verteilung zu beeinflussen.

11. Verfahren nach einem der Ansprüche 7 bis 10, **dadurch gekennzeichnet, dass** ein zweiter Winkel (β), um den wenigstens der mittlere Bereich (37) der Förderfläche (36) gegenüber der horizontalen Ebene zur Aufnahmevorrichtung (10) hin geneigt ist, angepasst wird, um die Verteilung zu beeinflussen.

12. Verfahren nach einem der Ansprüche 7 bis 11, **dadurch gekennzeichnet, dass** die Schwadereinheit einen Niederhalter (40) aufweist, wobei wenigstens eine Position des Niederhalters (40) gegenüber den Rotoren (11, 14) angepasst wird, um die Verteilung zu beeinflussen.

13. Verfahren nach einem der Ansprüche 7 bis 12, **dadurch gekennzeichnet, dass** der Niederhalter (40) eine bezüglich der Längsachse (X) wenigstens teilweise vor dem Aufnahmerotor (11) angeordnete, drehbare Niederhalterwalze (41) sowie eine bezüglich der Längsachse (X) wenigstens teilweise dahinter angeordneten Leitabdeckung (46) aufweist, die zwischen sich und wenigstens einem der Rotoren (11, 14) einen Förderkanal (18) für Erntegut definiert, wobei eine Position der Leitabdeckung angepasst und hierdurch die Geometrie des Förderkanals (18) verändert wird, um die Verteilung zu beeinflussen.

14. Verfahren nach einem der Ansprüche 7 bis 13, **dadurch gekennzeichnet, dass** eine vertikale Position der Leitabdeckung (46) angepasst wird, um die Verteilung zu beeinflussen.

15. Verfahren nach einem der vorangehenden Ansprüche 7 bis 14, **dadurch gekennzeichnet, dass** die Schwadereinheit eine Mehrzahl von Leitzinken (48) aufweist, die sich entlang der Längsachse (X) erstrecken und das vom Übergaberotor (14) abgegebene Erntegut in Richtung auf die Querfördervorrichtung (30) lenken, wobei eine Neigung der Leitzinken (48) gegenüber der Längsachse (X) in Richtung auf die Querachse (Y) und/oder eine Neigung der Leitzinken (48) gegenüber der Längsachse (X) in Richtung auf die Hochachse (Z) angepasst wird, um die Verteilung zu beeinflussen.

## Claims

1. Swather (1) comprising at least one pick-up device (10) which has a pick-up rotor (11) and a transfer rotor (14), which can be driven in the same direction about rotation axes (A, B) extending at least predominantly along a transverse axis (Y), the pick-up rotor (11) being designed to pick up agricultural crop from the ground (70) by means of pick-up tines (12), to raise the crop with respect to a vertical axis (Z) and to transfer the crop to the transfer rotor (14), which is arranged at least partially higher than the pick-up rotor (11) and is designed to receive the crop by means of transfer tines (15), to raise the crop at least initially with respect to the vertical axis (Z) and to transfer the crop to a downstream, transverse conveying device (30) which is arranged at least partially behind the pick-up device (10) with respect to a longitudinal axis (X) and is designed to receive the crop transferred by the transfer rotor (14) on a conveying surface (36), to convey the crop by means of a conveying element (32) along the transverse axis (Y) and to deposit the crop in swaths on the ground (70), the transfer rotor (14) being designed to dispense the crop at least partially above the conveying surface (36) with respect to the vertical axis (Z) and to drop the crop onto the conveying surface,
**characterized in that**
in at least one working position of the swather (1), a normal line (N), which extends perpendicularly to a central region (37) of the conveying surface with respect to the longitudinal axis (X) and through a foremost point (38) of the conveying element (32) with respect to the longitudinal axis (X), at least touches a movement region (D) of the transfer tines (15).

2. Swather according to claim 1, **characterized in that** the transfer tines (15) engage between the pick-up tines (12) in such a way that the movement regions (C, D) of the transfer tines (15) and of the pick-up tines (12) overlap, as seen along the transverse axis (Y).

3. Swather according to either of the preceding claims,
**characterized in that** the pick-up device (10) has a stripping device (20) comprising pick-up tine stripper portions (23) and pick-up tine gaps (25) formed therebetween with respect to the transverse axis (Y), through which the pick-up tines (12) at least partially protrude, and transfer tine stripper portions (24) and transfer tine gaps (26) formed therebetween, through which the transfer tines (15) at least partially protrude, the transfer tine stripper portions (24) being designed in such a way that the transfer tines (15) are immersed between them in accordance with a rotation of the transfer rotor (14).

4. Swather according to any of the preceding claims, **characterized in that** an immersion region (29), in which the transfer tines (15) are completely immersed between the transfer tine stripper portions (24), is arranged vertically above the conveying surface (36) in at least one working position of the swather (1).

5. Swather according to any of the preceding claims, **characterized in that** the immersion region (29) is offset with respect to a rotation axis (B) of the transfer rotor (14) by more than 70° relative to an uppermost point (P) of the movement region (D) of the transfer tines (15).

6. Swather according to the preamble of claim 1 or according to any of the preceding claims, **characterized in that,** in at least one working position of the swather (1), a tangential line (T) to the movement region (D) of the transfer tines (15), which extends through a foremost point (38) of the conveying element (32) with respect to the longitudinal axis (X), encloses a first angle (α) with a horizontal plane, which is at least 60°, measured from the horizontal plane in the direction of rotation of the transfer rotor (14).

7. Method for operating a swather according to the preamble of claim 1 or any of the preceding claims, the swather (1) comprising at least one swather unit (8) which has the pick-up device (10) and the transverse conveying device (30), **characterized in that** at least one operating parameter of the swather unit (8) is adjusted in order to influence a distribution of the crop on the conveying surface (36).

8. Method according to claim 7, **characterized in that** the distribution of the crop is detected by at least one sensor (58), and the at least one operating parameter is adjusted depending on the detected distribution.

9. Method according to either claim 7 or claim 8, **characterized in that** the at least one parameter is adjusted to ensure that the crop is at least partially deposited in a central region (37) of the conveying surface (36) with respect to the longitudinal axis (X).

10. Method according to any of claims 7 to 9, **characterized in that** a speed of the transfer rotor (14) is adjusted in order to influence the distribution.

11. Method according to any of claims 7 to 10, **characterized in that** a second angle (β), by which at least the central region (37) of the conveying surface (36) is tilted toward the pick-up device (10) relative to the horizontal plane, is adjusted in order to influence the distribution.

12. Method according to any of claims 7 to 11, **characterized in that** the swather unit has a hold-down device (40), at least one position of the hold-down device (40) relative to the rotors (11, 14) being adjusted in order to influence the distribution.

13. Method according to any of claims 7 to 12, **characterized in that** the hold-down device (40) has a rotatable hold-down roller (41) arranged at least partially in front of the pick-up rotor (11) with respect to the longitudinal axis (X), and a guide cover (46) which is arranged at least partially behind it with respect to the longitudinal axis (X) and defines a conveying channel (18) for the crop between itself and at least one of the rotors (11, 14), a position of the guide cover being adjusted and the geometry of the conveying channel (18) being changed as a result, in order to influence the distribution.

14. Method according to any of claims 7 to 13, **characterized in that** a vertical position of the guide cover (46) is adjusted in order to influence the distribution.

15. Method according to any of the preceding claims 7 to 14,
**characterized in that** the swather unit has a plurality of guide tines (48) which extend along the longitudinal axis (X) and direct the crop dispensed by the transfer rotor (14) in the direction of the transverse conveyor device (30), an inclination of the guide tines (48) relative to the longitudinal axis (X) in the direction of the transverse axis (Y) and/or an inclination of the guide tines (48) relative to the longitudinal axis (X) in the direction of the vertical axis (Z) being adjusted in order to influence the distribution.

## Revendications

1. Andaineuse (1) comprenant au moins un dispositif récepteur (10) ayant un rotor récepteur (11) et un rotor de transfert (14) entrainés dans le même sens autour d'axes (A, B) qui s'étendent principalement selon un axe transversal (Y),
- le rotor récepteur (11) étant conçu pour prendre sur le sol (70) les produits agricoles avec des dents de prise (12) pour les soulever selon un axe montant (Z) et les transférer au rotor de transfert (14) au moins en partie installé plus haut que le rotor récepteur (11) et conçu pour reprendre les produits avec des dents de transfert (15), soulever des produits au moins initialement selon l'axe montant (Z) et les transférer à un dispositif de transfert transversal (30), en aval, installé par rapport à l'axe longitudinal (X) au moins en partie derrière le dispositif récepteur (10) et qui est conçu pour recevoir les produits transférés par le rotor de transfert (14) sur une surface de transfert (36) en les transférant à l'aide d'un élément de transfert (32) selon l'axe transversal (Y) et les déposer sur le sol (70) sous la forme d'andains,
- le rotor de transfert (14) étant conçu pour distribuer les produits selon l'axe montant (Z) au moins en partie au-dessus de la surface de transfert (36) et éjecter les produits sur cette surface,
andaineuse **caractérisée en ce que**
dans au moins une position de fonctionnement de l'andaineuse (1), une droite normale (N) perpendiculaire à la surface de transfert qui est perpendiculaire à la zone médiane (37) selon l'axe longitudinal (X) et qui passe par au moins un point (38) de l'élément de transfert (32) le plus en avant par rapport à l'axe longitudinal (X), touche au moins en partie une zone de mouvement (D) des dents de transfert (15).

2. Andaineuse selon la revendication 1,
**caractérisée en ce que**
les dents de transfert (15) viennent prendre entre les dents de prise (12) pour que les zones de déplacement (C, D) des dents de transfert (15) et des dents de prise (12) se chevauchent selon l'axe transversal (Y).

3. Andaineuse selon l'une des revendications précédentes,
**caractérisée en ce que**
le dispositif récepteur (10) a un dispositif de raclage (20) avec des segments de raclage de dents de prise (23) et des intervalles de dents de prise (25) intermédiaires selon l'axe transversal (Y), et que les dents de prise (12) traversent au moins partiellement, ainsi que des segments de raclage de dents de transfert (24) et des intermédiaires de dents de transfert (26) à travers lesquelles les dents de transfert (15) passent au moins en partie, les segments de raclage de dents de transfert (24) étant conçus pour que les dents de transfert (15) pénètrent entre eux selon la rotation du rotor de transfert (14).

4. Andaineuse selon l'une des revendications précédentes,
**caractérisée en ce qu'**
elle comporte verticalement au-dessus de la surface de transfert (36) une zone de plongée (29) dans laquelle les dents de transfert (15) s'escamotent complètement entre les segments de raclage de dents de transfert (24), dans au moins une position de travail de l'andaineuse (1).

5. Andaineuse selon l'une des revendications précédentes,
**caractérisée en ce que**
la zone de plongée (29) est décalée par rapport à l'axe de rotation (B) du rotor de transfert (14) d'au moins 70° par rapport au point le plus haut (P) de la zone de déplacement (D) des dents de transfert (15).

6. Andaineuse selon le préambule de la revendication 1 ou l'une des revendications précédentes,
**caractérisée en ce que**
dans au moins une position de fonctionnement de l'andaineuse (1), une tangente (T) à la zone de déplacement (D) des dents de transfert (15) passant par le point (38) le plus avant selon l'axe longitudinal (X) de l'élément de transfert (32) forme avec un plan horizontal, un premier angle (α) qui, partant du plan horizontal, mesuré dans le sens de rotation du bloc de transfert (14), est au moins égal à 60°.

7. Procédé de gestion d'une andaineuse selon le préambule de la revendication 1 ou l'une des revendications précédentes,
selon lequel
l'andaineuse (1) a au moins une unité d'andaineuse (8) qui a un dispositif de prise (10) et un dispositif de transfert transversal (30),
**caractérisée en ce qu'**au moins un paramètre de l'unité d'andaineuse (8) est adapté pour influencer la répartition des produits récoltés sur la surface de transfert (36).

8. Procédé selon la revendication 7,
**caractérisé en ce que**
la distribution du produit récolté est saisie par au moins un capteur (58) qui adapte le paramètre de fonctionnement selon la distribution saisie.

9. Procédé selon l'une des revendications 7 ou 8,
**caractérisé en ce que**
au moins un paramètre est adapté pour permettre au produit récolté d'être déposé au moins en partie dans une zone médiane (37) selon l'axe longitudinal (X) de la surface de transfert (36).

10. Procédé selon l'une des revendications 7 à 9,
**caractérisé en ce que**
on adapte la vitesse de rotation du rotor de transfert (14) pour influencer la distribution.

11. Procédé selon l'une des revendications 7 à 10,
**caractérisé en ce qu'**
on adapte un second angle (β) d'inclinaison selon lequel au moins une zone médiane (37) de la surface de transfert (36) est inclinée par rapport au plan horizontal du dispositif de prise (10) pour influencer la distribution.

12. Procédé selon l'une des revendications 7 à 11,
**caractérisé en ce que**
l'unité d'andaineuse comporte un organe abaisseur (40) et au moins une position de l'organe abaisseur (40) est adaptée par rapport aux rotors (11, 14) pour influencer la distribution.

13. Procédé selon l'une des revendications 7 à 12,
**caractérisé en ce que**
l'organe abaisseur (40) comporte un cylindre abaisseur rotatif (41) installé au moins en partie devant le rotor récepteur (11) selon l'axe longitudinal (X) et un capot de guidage (46) installé au moins en partie derrière celui-ci selon l'axe longitudinal (X), et qui forme un canal de transfert (18) pour le produit récolté, entre lui et au moins l'un des rotors (11, 14), la position du capot de guidage étant adaptée et modifiant la géométrie du canal de transfert (18) pour influencer la distribution.

14. Procédé selon l'une des revendications 7 à 13,
**caractérisé en ce que**
la position verticale du capot du guidage (46) est adaptée pour influencer la distribution.

15. Procédé selon l'une des revendications précédentes 7 à 14,
**caractérisé en ce que**
l'unité d'andaineuse comporte un ensemble de dents de guidage (48) qui s'étend le long de l'axe longitudinal (X) et guide le produit transféré par le rotor de transfert (14) en direction du dispositif de transfert transversal (30) et ainsi adapter l'inclinaison des dents de guidage (48) par rapport à l'axe longitudinal (X) en direction de l'axe transversal (Y) et/ou l'inclinaison des dents de guidage (48) par rapport à l'axe longitudinal (X) en direction de l'axe montant (Z) pour influencer la distribution.
